(19) Europäisches Patentamt
European Patent Office
Office européen des brevets

(11) Veröffentlichungsnummer: **0 315 901 B1**

(12) # EUROPÄISCHE PATENTSCHRIFT

(45) Veröffentlichungstag der Patentschrift: **19.10.94**

(51) Int. Cl.⁵: **C07D 209/10**, C07D 403/14, C09B 23/08

(21) Anmeldenummer: **88118358.6**

(22) Anmeldetag: **04.11.88**

(54) **Tetraindolyl-heptamethin-ether, -alkohole und Farbstoffe.**

(30) Priorität: **11.11.87 DE 3738240**

(43) Veröffentlichungstag der Anmeldung:
**17.05.89 Patentblatt 89/20**

(45) Bekanntmachung des Hinweises auf die Patenterteilung:
**19.10.94 Patentblatt 94/42**

(84) Benannte Vertragsstaaten:
**CH DE FR GB LI**

(56) Entgegenhaltungen:
**DE-A- 2 362 956**
**FR-A- 777 034**
**FR-A- 796 789**
**FR-A- 2 259 827**

(73) Patentinhaber: **BAYER AG**

**D-51368 Leverkusen (DE)**

(72) Erfinder: **Berneth, Horst, Dr.**
**Erfurter Strasse 1**
**D-5090 Leverkusen 1 (DE)**
Erfinder: **Psaar, Hubertus, Dr.**
**Paul-Klee-Strasse 21**
**D-5090 Leverkusen 1 (DE)**
Erfinder: **Jabs, Gert, Dr.**
**Wingensiefer Kamp 25**
**D-6068 Odenthal (DE)**

EP 0 315 901 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Tetraindolyl-heptamethinether und -alkohole der isomeren Formeln

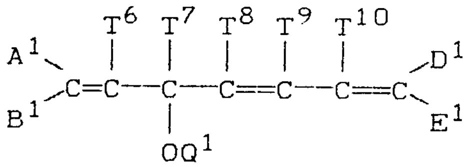

V

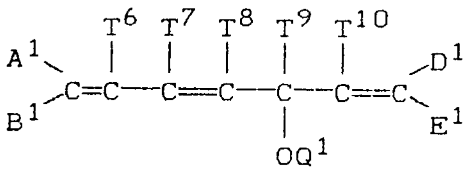

VI

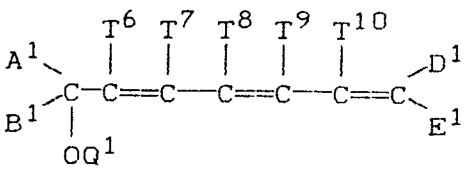

VII

und

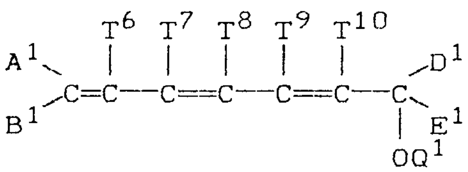

VIII

worin $A^1$, $B^1$, $D^1$ und $E^1$

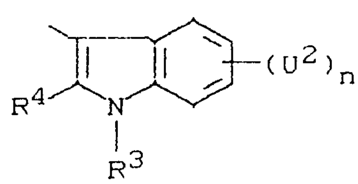

bedeuten und untereinander gleich oder verschieden sein können,

$Q^1$ Wasserstoff, $C_1$- bis $C_{18}$-Alkyl, das durch Chlor, $C_1$- bis $C_4$-Alkoxy, Cyano oder $C_1$- bis $C_4$-Alkoxycarbonyl substituiert sein kann, Allyl, Cyclopentyl, Cyclohexyl, gegebenenfalls durch $C_1$- bis $C_4$-Alkyl, Chlor und/oder $C_1$- bis $C_4$-Alkoxy substituierte Benzyl-, Phenethyl-, Naphthylmethyl-, Picolyl-, Phenyl- oder Naphthylreste,

$R^3$ Wasserstoff, $C_1$- bis $C_{18}$-Alkyl, das durch Chlor, $C_1$- bis $C_4$-Alkoxy, Cyano oder $C_1$- bis $C_4$-Alkoxycarbonyl substituiert sein kann, Allyl, Cyclopentyl, Cyclohexyl, gegebenenfalls durch $C_1$- bis $C_4$-Alkyl, Chlor und/oder $C_1$- bis $C_4$-Alkoxy substituierte Benzyl-, Phenethyl-

, Naphthylmethyl-, oder Picolylreste,

$R^4$ Wasserstoff, $C_1$ - bis $C_{18}$-Alkyl, das durch Chlor, $C_1$- bis $C_4$-Alkoxy, Cyano oder $C_1$- bis $C_4$-Alkoxycarbonyl substituiert sein kann, Allyl, Cyclopentyl, Cyclohexyl, gegebenenfalls durch $C_1$- bis $C_4$-Alkyl, Chlor, Brom, $C_1$- bis $C_4$-Alkoxy, Cyano, Nitro und/oder $C_1$- bis $C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl- oder Chinolylreste,

$T^6$ bis $T^{10}$ Wasserstoff, $C_1$- bis $C_8$-Alkyl, das durch Chlor, $C_1$- bis $C_4$-Alkoxy, Cyano oder $C_1$- bis $C_4$-Alkoxycarbonyl substituiert sein kann, Vinyl, Allyl, Cyclohexyl, Cyclopentyl, Fluor, Chlor, Brom, $C_1$- bis $C_8$-Alkoxy, das noch durch $C_1$- bis $C_4$-Alkoxy substituiert sein kann, $C_1$- bis $C_4$-Dialkylamino, Piperidino, Pyrrolidino, Nitro, Cyano, $C_1$- bis $C_4$-Alkoxycarbonyl, gegebenenfalls durch $C_1$- bis $C_4$-Alkyl, Chlor, $C_1$- bis $C_4$-Alkoxy, $C_1$- bis $C_4$-Alkylsulfonyl, Cyano und/oder $C_1$- bis $C_4$-Alkoxycarbonyl substituierte Benzyl-, Phenethyl-, Naphthylmethyl-, Picolyl-, Phenyl-, Naphthyl-, Pyridyl-, Chinolyl-, Pyrimidyl-, Pyrazinyl-, Indolyl-, Indolenyl-, Indolizinyl-, Imidazolyl-, Oxazolyl-, Thiazolyl-, Triazolyl-, Benzimidazolyl-, Benzoxazolyl- oder Benzthiazolylreste oder jeweils zwei der Reste $T^6$ bis $T^{10}$ eine Brücke der Formeln $-CH_2CH_2-$, $-CH_2CH_2CH_2-$, $-CH_2CH_2CH_2CH_2-$, $-CH_2SCH_2-$,

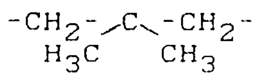 , 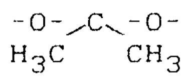 ,

$-CH=CH-CH_2-$, $-CH=CH-CH=CH-$,

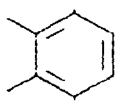 , 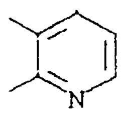 , 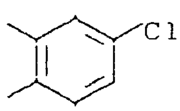

$U^2$ Wasserstoff, $C_1$- bis $C_8$-Alkyl, Allyl, Cyclohexyl, Benzyl, Phenyl, Hydroxy, $C_1$- bis $C_4$-Alkoxy, Chlor, Brom, $C_1$- bis $C_4$-Dialkylamino, Nitro, Cyano, $C_1$- bis $C_4$-Alkylthio, $C_1$- bis $C_4$-Alkoxycarbonyl, $C_1$- bis $C_4$-Dialkylaminocarbonyl, $C_1$- bis $C_4$-Alkoxycarbonyloxy oder $C_1$- bis $C_4$-Alkylsulfonyl oder zusammen mit $R^3$ eine $-CH_2CH_2-$ oder $-CH_2CH_2CH_2-$-Brücke, die durch maximal 3 Methylgruppen substituiert sein kann, und

n 1 oder 2 bedeuten,

ihre Herstellung und Verwendung in druck- und thermoempfindlichen Aufzeichnungsmaterialien, die im Infrarotbereich 750 bis 950 nm gelesen werden können, sowie Aufzeichnungsmaterialien, die diese Verbindungen enthalten.

Bevorzugt sind Tetraindolylheptamethinether oder -alkohole der Formeln V bis VIII worin

$Q^1$ Wasserstoff, $C_1$- bis $C_8$-Alkyl, das durch Chlor, Methoxy, Ethoxy oder Cyano substituiert sein kann, Allyl, Cyclopentyl, Cyclohexyl, gegebenenfalls durch Methyl, Chlor oder Methoxy substituierte Benzyl-, Phenethyl- oder Picolylreste,

$R^3$ Wasserstoff, $C_1$- bis $C_8$-Alkyl, das durch Chlor, Methoxy, Ethoxy, Cyano oder Methoxycarbonyl substituiert sein kann, Allyl, Cyclopentyl, Cyclohexyl, gegebenenfalls durch Methyl, Chlor oder Methoxy substituierte Benzyl-, Phenethyl- oder Picolylreste,

$R^4$ Wasserstoff, $C_1$- bis $C_8$-Alkyl, das durch Chlor, Methoxy, Ethoxy, Cyano oder Methoxycarbonyl substituiert sein kann, Allyl, Cyclopentyl, Cyclohexyl, gegebenenfalls durch Methyl, Chlor, Methoxy, Cyano, Nitro und/oder Methoxycarbonyl substituierte Benzyl-, Phenethyl-, Picolyl-, Phenyl-, Naphthyl-, Pyridyl-, Pyrimidyl-, Benzimidazolyl-, Benzoxazolyl-, Benzthiazolyl- oder Chinolylreste,

$T^6$ und $T^{10}$ Wasserstoff, $C_1$- bis $C_8$-Alkyl, das durch Chlor, Methoxy, Cyano oder Methoxycarbonyl substituiert sein kann, Vinyl, Allyl, Cyclopentyl, Cyclohexyl, Chlor, $C_1$- bis $C_8$-Alkoxy, Cyano, Methoxycarbonyl, Nitro, Benzyl, gegebenenfalls durch Methyl, Chlor, Cyano oder Methoxy substituierte Phenyl- oder Pyridylreste,

$T^7$ bis $T^9$ Wasserstoff, $C_1$- bis $C_8$-Alkyl, das durch Chlor, Methoxy, Cyano oder Methoxycarbonyl substituiert sein kann, Allyl, Cyclopentyl, Cyclohexyl, Chlor, Brom, Cyano, Methoxy- und Ethoxycarbonyl, Nitro, $C_1$- bis $C_4$-Alkoxy, $C_1$- bis $C_4$-Dialkylamino, Benzyl, gegebenenfalls durch Methyl, Ethyl, Chlor, Methoxy, Ethoxy, Cyano, Nitro und/oder Methoxycarbonyl

substituierte Phenyl-, Naphthyl-, Pyridyl-, Chinolyl-, Pyrimidyl-, Indolenyl-, Indolizinyl-, Imidazolyl-, Oxazolyl-, Thiazolyl-, Benzimidazolyl-, Benzoxazolyl- oder Benzthiazolylreste oder

$T^7$ mit $T^8$ oder $T^9$ oder $T^8$ mit $T^9$ eine Brücke der Formeln

$-CH_2CH_2-$, $-CH_2CH_2CH_2-$,

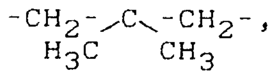

$-CH=CH-CH_2-$, $-CH=CH-CH=CH-$ oder

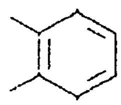

$U^2$ Wasserstoff, $C_1$- bis $C_4$-Alkyl, Cyclohexyl, Benzyl, $C_1$- bis $C_4$-Alkoxy, Chlor, $C_1$- bis $C_4$-Dialkylamino, Nitro, Cyano, Methoxy- oder Ethoxycarbonyl oder Methylsulfonyl, wobei $U^2$ in 5-, 6- und/oder 7-Position am Indolylrest stehen kann oder ein in 7-Position stehender Rest $U^2$ zusammen mit $R^3$ eine Brücke der Formeln

$-CH_2CH_2-$

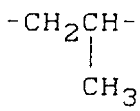 , 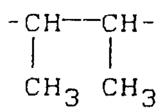 , 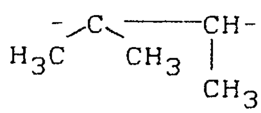 ,

$-CH_2CH_2CH_2-$,

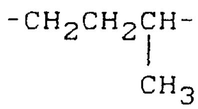 , 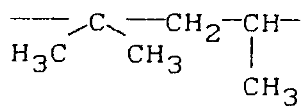

bilden kann, und

n 1 oder 2 bedeuten,

Besonders bevorzugt sind Tetraindolylheptamethinether oder -alkohole der Formel

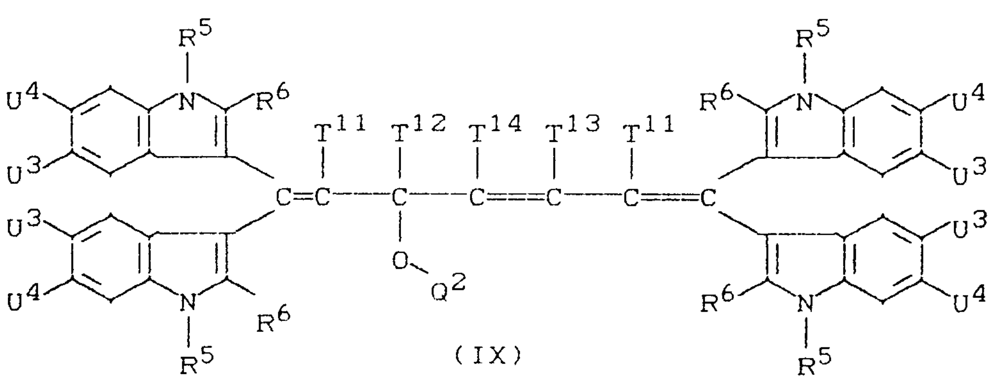

(IX)

und ihre bezüglich der Stellung der $Q^2O$Gruppe isomeren Formen wie sie in den Formeln II bis IV und VI bis VIII wiedergegeben sind, worin

| | |
|---|---|
| $Q^2$ | Wasserstoff, Methyl, Ethyl, Propyl, Butyl, Hexyl, Octyl, Cyclohexyl oder Benzyl, |
| $R^5$ | Methyl, Ethyl, Propyl, Butyl, Hexyl, Octyl, 2-Cyanoethyl, 2-Methoxyethyl, 2-Methoxycarbonylethyl, 2-Chlorethyl, 2-Acetoxyethyl, Cyclohexyl, Allyl oder Benzyl, |
| $R^6$ | Methyl, Ethyl, Propyl, Butyl, Hexyl, Octyl, Cyclohexyl, Benzyl, Phenyl, 2-, 3- oder 4-Chlor-phenyl, 2-, 3- oder 4-Methoxy-phenyl, 4-Nitro-phenyl, 2,4-Dichlor-phenyl, 2-, 3-oder 4-Tolyl oder 2-, 3- oder 4-Pyridyl, |
| $T^{11}$ | Wasserstoff, Methyl, Ethyl, Propyl, Butyl, Vinyl, 2-Chlor-ethyl, 2-Cyano-ethyl, Chlor, Cyano, Phenyl, 4-Tolyl oder 4-Chlor-phenyl, |
| $T^{12}$ und $T^{13}$ | Wasserstoff, Methyl, Ethyl, Propyl, Butyl, Chlor, Cyano, Methoxycarbonyl, Dimethylamino, Phenyl, 4-Tolyl, 4-Chlor-phenyl, Pyridyl oder $T^{12}$ und $T^{13}$ gemeinsam eine Gruppierung der Formeln $-CH_2CH_2-$, $-CH_2CH_2CH_2-$, 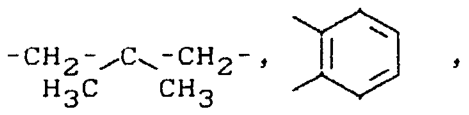 , |
| $T^{14}$ | Wasserstoff, Methyl, Ethyl, Propyl, Butyl, Chlor, Brom, Cyano, Phenyl, 4-Tolyl, 4-Chlorphenyl, 4-Nitro-phenyl, 4-Pyridyl, 3,3-Dimethyl-indolen-2-yl, Indolizin-2-yl, 2-Benzimidazolyl, 2-Benzoxazolyl oder 2-Benzthiazolyl, |
| $U^3$ und $U^4$ | Wasserstoff, Methyl, Methoxy, Chlor, Cyano, Methoxycarbonyl oder Nitro bedeuten. |

Ein weiterer Gegenstand der Erfindung sind Tetraindolylheptamethinfarbstoffe der Formel

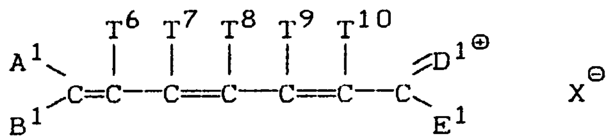

X

worin

$A^1$, $B^1$, $E^1$ und $T^6$ bis $T^{10}$ die bei den Formeln V bis VIII angegebene Bedeutung haben und

$D^{1\oplus}$ für

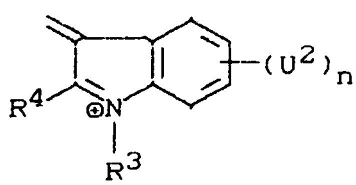

und

$X^\ominus$ für ein Anion stehen, ihre Verwendung in optischen Aufzeichnungsmaterialien sowie optische Aufzeichnungsmaterialien, die diese Farbstoffe enthalten.

Anionen $X^\ominus$ sind z.B. Halogenid-Ionen, $BF_4^\ominus$, $ClO_4^\ominus$, $SiF_6^{2\ominus}$, $B(C_6H_5)_4^\ominus$, $H_2PO_4^\ominus$ oder die Anionen von gegebenenfalls durch Halogen, Alkyl, Alkoxy, Cyano, Alkoxycarbonyl, Nitro oder Alkylsulfonyl substituierten $C_1$- bis $C_{18}$-Carbonsäuren, $C_2$-$C_{18}$-Dicarbonsäuren, $C_1$- bis $C_{18}$-Alkansulfonsäuren, Benzol- oder Naphthalin-mono oder dicarbon- oder -sulfonsäuren.

Ebenfalls Gegenstand der Erfindung sind Verfahren zur Herstellung von Tetraindolylheptamethinethern oder -alkoholen der Formeln V bis VIII.

1. Die Herstellung erfolgt durch Kondensation von Ethenen der Formeln

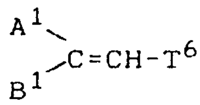 und/oder 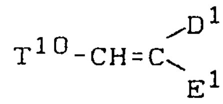

XI XII

oder Carbinolen der Formeln

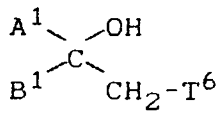 und/oder 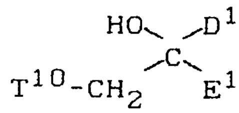

XIII XIV

oder Salzen der Formeln

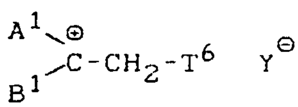 und/oder 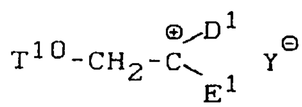

XV XVI

oder anderen Äquivalenten
mit 1,3-Dicarbonylverbindungen der Formel

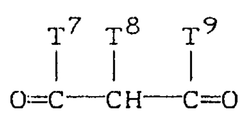 XVII

oder deren Acetalen oder Ketalen der Formel

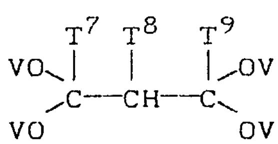 XVIII

oder vinylogen Amidiniumsalzen der Formel

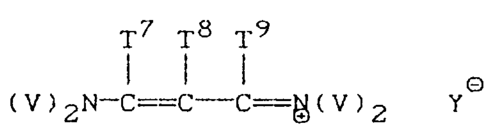 XIX

oder vinylogen Chlorimmoniumsalzen von Formeln

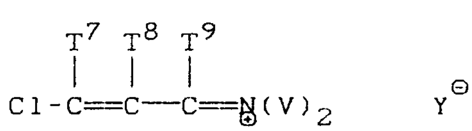 XX

oder

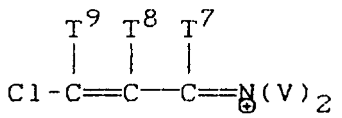

$Y^{\ominus}$ XXI

oder anderen reaktiven Äquivalenten von 1,3-Dicarbonylverbindungen und anschließende Umsetzung mit

$MOQ^1$ XXII

worin

$A^1$, $B^1$, $D^1$, $E^1$, $Q^1$ und $T^6$ bis $T^{10}$ die bei den Formeln V bis VIII angegebene Bedeutung besitzen und gleich oder verschieden sein können,

V für $C_1$-$C_{18}$-Alkyl, Phenyl, Naphthyl oder Anthracenyl, die gegebenenfalls über eine $C_1$- bis $C_{18}$-Alkylgruppe gebunden sind,

$Y^{\ominus}$ für ein Anion,

M für ein Alkaliion, das Äquivalent eines Erdalkaliions oder für $NR_4$ stehen und

R den gleichen Bedeutungsumfang annehmen kann wie V.

Beispiele für M sind Lithium, Natrium, Kalium, 1/2 Magnesium, 1/2 Calcium, 1/2 Barium, $N(C_2H_5)_4$,

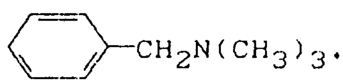

Die Kondensation erfolgt üblicherweise im Lösungsmittel unter sauren und/oder basischen Bedingungen, wobei ein wasser- oder alkoholentziehendes Mittel zugesetzt sein kann, bei Temperaturen zwischen Raumtemperatur und dem Siedepunkt des Mediums, vorzugsweise bei 40 bis 140 °C.

Geeignete Lösungsmittel sind Alkohole wie Methanol, Ethanol, 1-Propanol, 2-Propanol, 1-Butanol, 1-Octanol, Cyclohexanol, Benzylalkohol, wobei vorzugsweise ein Alkohol der Formel

$HOQ^1$ XXIII

worin

$Q^1$ die bei den Formeln V bis VIII angegebene Bedeutung besitzt,

verwendet wird.

Andere geeignete Lösungsmittel sind Ester wie Essigsäuremethyl-, -ethyl- oder -butylester; chlorierte Kohlenwasserstoffe wie Methylenchlorid, Ethylenchlorid, Chloroform; Ketone wie Aceton, 2-Butanon; Aromaten wie Benzol, Toluol, Xylol; chlorierte Aromaten wie Chlorbenzol, Dichlorbenzol; Carbonsäuren wie Ameisensaure, Essigsäure, Propionsäure, und Anhydride wie Acetanhydrid.

Geeignete Säuren sind anorganische Säuren wie Salzsäure, Schwefelsäure, Tetrafluorborsäure, Perchlorsäure, Phosphorsäure; Carbonsäuren wie Ameisensaure, Essigsäure, Trifluoressigsäure; Sulfonsäuren wie Methansulfonsäure, Ethansulfonsäure, Trifluormethansulfonsäure, Nonafluorbutansulfonsäure, Benzolsulfonsäure, Toluolsulfonsäure, Phosphonsäuren wie Methanphosphonsäure, oder Ionenaustauscher wie solche auf Basis sulfonierter Styrol-/Divinylbenzol-Polymerisate.

Geeignete Basen sind Amine wie Triethylamin, Triethanolamin, Piperidin, Pyrrolidin oder Pyridin.

Geeignete wasser- oder alkoholentziehende Mittel sind Anhydride wie Acetanhydrid, Trifluoressigsäureanhydrid, Benzoesäureanhydrid; Säurechloride wie Acetylchlorid, Phosphoroxychlorid, Thionylchlorid, Oxalylchlorid, Phosgen, oder anorganische Oxide wie Phosphorpentoxid.

Beispiele für Verbindungen der Formel XVII sind:

$O=CH\text{-}CH_2\text{-}CHO$,

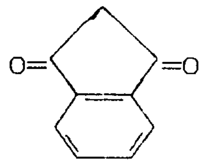
,
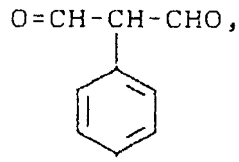

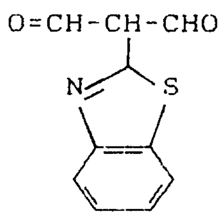
,
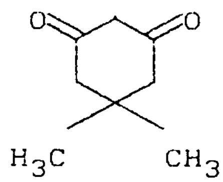
,
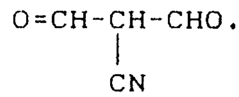

Beispiele für Verbindungen der Formel XVIII sind:
$(CH_3O)_2CH\text{-}CH_2\text{-}CH(OCH_3)_2$

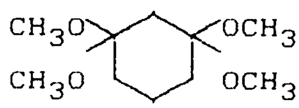

Beispiele für Verbindungen der Formel XIX sind:

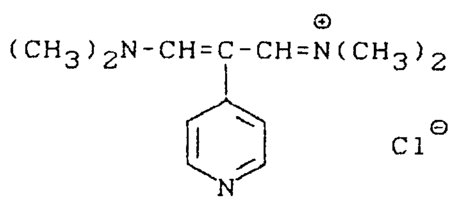

Beispiele für Verbindungen der Formel XX sind:

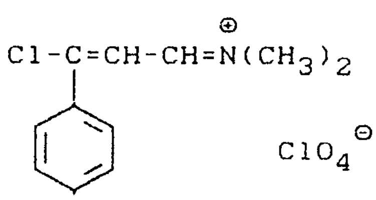
,
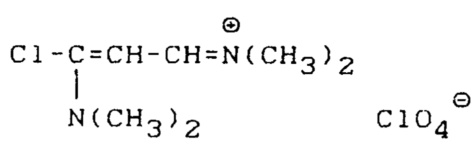

Die bei dieser Kondensation erhaltenen Farbstoffe der Formel X können isoliert werden.

Zur Herstellung der Ether und Alkohole der Formeln V bis VIII wird jedoch vorteilhaft ohne Isolierung weiter mit den Hydroxiden oder Alkoholaten der Formel XXII umgesetzt. Dies geschieht in der Regel in dem Kondensationsmedium, wobei Wasser oder Alkohole der Formel XXIII zugesetzt werden können Die Temperaturen liegen zwischen Raumtemperatur und dem Siedepunkt des Mediums, vorzugsweise zwischen 20 und 140 ° C.

2. Die Herstellung erfolgt durch Kondensation von Aldehyden oder Ketonen der Formeln

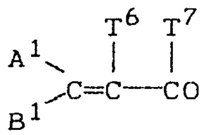 und/oder 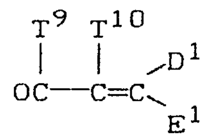

XXIV XXV

mit Butadienen der Formeln

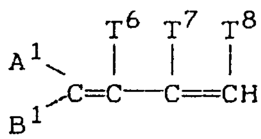 und/oder 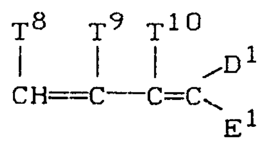

XXVI XXVII

worin die Symbole die vorstehend genannte Bedeutung haben, und anschließende Umsetzung mit XXII.

Die Kondensation erfolgt üblicherweise unter den oben für Verfahren 1, angegebenen Bedingungen.

3. Die Herstellung der Verbindungen V bis VIII mit $T^8 = T^{8'}$ erfolgt durch Kondensation von Aldehyden und Ketonen der Formeln XXIV und/oder XXV mit methylenaktiven Verbindungen der Formel

$T^{8'}$-$CH_3$ XXVIII

worin

$T^{8'}$ Cyano, Hydroxycarbonyl, Alkoxycarbonyl, Aryl oder einen heterocyclischen Rest bedeutet,

und anschließende Umsetzung mit XXII.

Die Kondensation erfolgt üblicherweise mit oder ohne Lösungsmittel unter sauren und/oder basischen Bedingungen, wobei in der Regel ein wasserentziehendes Mittel zugesetzt wird, bei Temperaturen zwischen Raumtemperatur und dem Siedepunkt des Mediums, vorzugsweise bei 25 bis 150 °C.

Geeignete Lösungsmittel sind chlorierte Kohlenwasserstoffe wie Methylenchlorid, Ethylenchlorid; Aromaten wie Benzol, Toluol, Xylol; chlorierte Aromaten wie Chlorbenzol, Dichlorbenzol, und Schwefelkohlenstoff.

Geeignete Säuren sind anorganische Säuren wie Schwefelsäure, Tetrafluorborsäure, Perchlorsäure; Carbonsäuren wie Ameisensäure, Essigsäure, Trifluoressigsäure; Sulfonsäuren wie Methansulfonsäure, Ethansulfonsäure, Trifluormethansulfonsäure, Benzolsulfonsäure, Toluolsulfonsaure.

Geeignete Basen sind Amine wie Triethylamin, Piperidin, Chinolin.

Geeignete wasserabspaltende Mittel sind Anhydride wie Acetanhydrid; Säurechloride wie Acetylchlorid, Phosphoroxychlorid, Phosphortrichlorid, Thionylchlorid, Oxalylchlorid, Phosgen; anorganische Oxide wie Phosphorpentoxid; oder Lewis-Säuren wie Zinkchlorid, Eisenchlorid, Aluminiumchlorid, Bortrichlorid, Bortrifluorid, Zinntetrachlorid.

Beispiele für Verbindungen der Formel XXVIII sind:

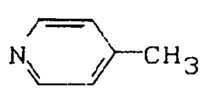 , 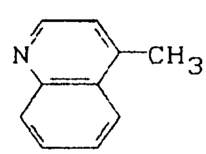 ,

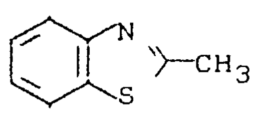 , 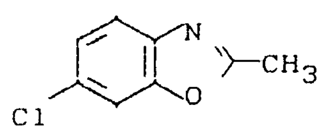 ,

oder Äquivalente von Verbindungen der Formel XXVIII

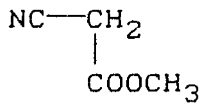 , 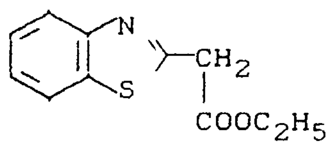 ,

HOOC--$CH_2$COOH,

die nach der Kondensation Produkte liefern, die denen der entsprechenden Verbindungen der Formel XXVIII gleichen.

Die bei der Kondensation erhaltenen Farbstoffe der Formel X können isoliert werden. Vorteilhaft wird jedoch ohne Isolierung weiter mit den Hydroxiden oder Alkoholaten der Formel XXII umgesetzt. Dies geschieht auf die weiter oben bereits beschriebene Weise.

Gegenstand der Erfindung sind außerdem Mischungen der Verbindungen V bis VIII. Die Substituenten $A^1$, $B^1$, $D^1$, $E^1$ und $T^6$ bis $T^{10}$ können untereinander gleich oder verschieden sein Die Mischungen können durch Mischen der Komponenten erhalten werden Bevorzugt sind Mischungen, die direkt bei den Verfahren 1. bis 3. erhalten werden. Sie können in Abhängigkeit von den Substituenten der Ausgangskomponenten und deren Gemischen mehrere Isomere enthalten.

Solche Mischungen zeichnen sich in der Regel durch besonders gute Löslichkeit in den bei der Anwendung gebräuchlichen Lösungsmitteln aus.

Die Tetraindolylheptamethinether oder -alkohole der Formeln V bis VIII und ihre Mischungen sind farblose bis bräunlich gefärbte Feststoffe.

Lösungen in Essigsäure zeigen eine starke Absorption mit einem Maximum im Bereich von 750 bis 950 nm Zusätzlich wird eine sehr schwache Absorption mit einem Maximum im Bereich 500 bis 650 nm gefunden.

Wird eine toluolische Lösung, die farblos bis beigefarben ist, mit saurem Ton oder Kieselgel in Kontakt gebracht, so entwickelt sich spontan eine bläulich bis grünlich graue Färbung. Zusätzlich kann im nahen Infrarotbereich von 750 bis 950 nm eine sehr starke Absorption gemessen werden, z.B. mit Dr. Lange Farbmeßsystem Xenocolor LS 100.

Wird eine Probe eines Ethers oder Alkohols der Formeln V bis VIII mit 2,2-Bis-(4-hydroxyphenyl)-propan vermahlen, so erhält man ein farbloses bis beigefarbenes Pulver. Erhitzt man dieses Pulver, z.B. in einem Schmelzpunktröhrchen, so wird ab ca. 100 °C eine kräftige schwarzblaue Farbe entwickelt.

Die Tetraindolylheptamethinether oder -alkohole der Formeln V bis VIII eignen sich demnach erfindungsgemäß in hervorragender Weise für druck- oder thermoempfindliche Aufzeichnungsmaterialien, die im Infrarotbereich von 750 bis 950 nm lesbar sind.

Aufzeichnungsmaterialien, die im nahen Infrarot absorbieren, werden benötigt, um die aufgezeichnete Information mit geeigneten Geräten lesen zu können, Die Verbreitung von Computern und die automatische Datenverarbeitung erfordern Geräte, die Informationen aus Dokumenten lesen können. Es wurden deshalb Einrichtungen zur optischen Buchstabenerkennung (OCR) entwickelt, die Textseiten lesen können, die in dem jeweiligen einprogrammierten Schrifttyp geschrieben sind. Üblicherweise arbeiten solche Einrichtungen im nahen Infrarot und deshalb muß natürlich die zu lesende Schrift Absorptionen im nahen Infrarot besitzen Übliche druck- und thermoempfindliche Aufzeichnungsmaterialien weisen jedoch eine solche Absorption im nahen Infrarot nicht auf.

Aufzeichnungsmaterialien, die eine solche Absorption im nahen Infrarot besitzen sind z.B. in den US-Patentschriften 4 020 056, 4 022 771, 4 026 883, 4 107 428 und 4 119 776 und in der europäischen Anmeldung 0 124 377 beschrieben.

Die erfindungsgemäßen Tetraindolylheptamethinether und -alkohole der Formeln V bis VIII und ihre Mischungen eignen sich nun in hervorragender Weise für solche OCR-lesbare Aufzeichnungsmaterialien. Hierfür ist neben ihrer starken Absorption im Bereich von 750 bis 950 nm insbesondere die geringe Absorption im sichtbaren Spektralbereich besonders vorteilhaft, da deshalb die erfindungsgemäßen Verbindungen in einfacher Weise bestehenden Farbbildnermischungen zugesetzt werden können, die in bekannter Weise z.B. blaue oder schwarze Farbtöne entwickeln, ohne daß dieser Farbton von dem Entwicklungsfarbton der erfindungsgemäßen Verbindungen nennenswert beeinflußt wird.

Geeignete Farbbildner, mit denen die erfindungsgemäßen Tetraindolylheptamethinether oder -alkohole der Formeln V bis VIII gemischt werden können, entstammen beispielsweise den Substanzklassen der Phthalide, Fluorane, Spirodipyrane, Chromenoindole, Phenoxazine, Phenothiazine, Carbazolylmethane, Dihydrochinazolone, Dihydro3,1-benzoxazin-2-one, 3,1-Benzoxazine oder anderen Triarylmethanleukofarbstoffen

Die Herstellung solcher druck- oder thermoempfindlicher Aufzeichnungsmaterialien geschieht in bekannter Weise.

Ein druckempfindliches Material besteht beispielsweise aus mindestens 1 Paar von Blättern, die mindestens einen Farbbildner der Formeln V bis VIII, gelöst oder dispergiert in einem nichtflüchtigen organischen Lösungsmittel, und einen sauren Entwickler enthalten.

Solche Verfahren und Zubereitungen sind beispielsweise aus den US-Patentschriften 2 800 457, 2 800 458, 2 948 753, 3 096 189 und 3 193 404 und aus den deutschen Offenlegungsschriften 2 555 080 und 2 700 937 bekannt.

Um eine frühzeitige Aktivierung der in dem druckempfindlichen Aufzeichnungsmaterial vorhandenen Farbbildner zu verhindern, werden diese vorzugsweise in Mikrokapseln eingeschlossen, die sich in der Regel durch Druck zerbrechen lassen.

Als Kapselwandmaterialien eignen sich z.B. Gelatine/Gummi arabicum, Polyamide, Polyurethane, Polysulfonamide, Polyester, Polycarbonate, Polysulfonate, Polyacrylate und Phenol-, Melamin- oder Harnstoff-Formaldehyd-Kondensate, wie sie beispielsweise in M. Gutcho, Capsule Technology and Microencapsulation, Noyes Data Corporation 1972, G. Baster, Microencapsulation, Processes and Applications, Herausgeber J.E. Vandegaar und den deutschen Offenlegungsschriften 2 237 545 und 2 119 933 beschrieben sind.

Bevorzugt werden Mikrokapseln verwendet, deren Hüllen aus Polyadditionsprodukten aus Poly-Isocyanaten und Polyaminen bestehen.

Isocyanate, Amine, Lösungsmittel und ein geeignetes Herstellungsverfahren für solche Mikrokapseln sind beispielsweise in DE-OS 3 203 059 beschrieben.

Ebenfalls bevorzugt werden Mikrokapseln verwendet, deren Hüllen aus Polyamiden oder Melamin-Formaldehyd-Kondensaten oder Gelatine/Gummi arabicum bestehen.

Als Entwickler sind Tone, sauer modifizierte Tone, Oxide oder saure Salze sowie monomere oder polymere Phenole oder Carbonsäuren zu nennen.

Die Tetraindolylheptamethinether und -alkohole der Formeln V bis VIII sind in den zur Mikroverkapselung üblichen nichtflüchtigen organischen Lösungsmitteln in der Regel ausreichend bis sehr gut löslich.

Thermoreaktive Aufzeichnungssysteme umfassen z.B. wärmeempfindliche Aufzeichnungs- und Kopiermaterialien und -papiere.

Ein solches Material ist beispielsweise in der DE-OS 2 555 080 beschrieben.

Als Entwickler eignen sich die gleichen Elektronenakzeptoren, wie sie in druckempfindlichen Papieren verwendet werden, vorzugsweise phenolische Verbindungen, die beispielsweise in der DE-PS 1 251 348 beschrieben sind, sowie Borsäure und organische, vorzugsweise aliphatische Dicarbonsäuren.

Ein weiteres geeignetes thermoreaktives Entwicklungssystem ist in DE-OS 3 337 296 beschrieben, bei dem sauer modifizierte Polymerisate, vorzugsweise des Acrylnitrils, als Entwickler wirken.

Die Tetraindolylheptamethinfarbstoffe der Formel X sind geeignet für optische Aufzeichnungsmaterialien.

Solche optischen Aufzeichnungsmaterialien tragen auf einem Substrat, vorwiegend einer Kunststoffplatte, eine lichtabsorbierende Beschichtung. Diese Beschichtung enthält neben dem Farbstoff häufig auch ein Bindemittel. Vorteilhaft wird sie aus Lösung, z.B. durch spin coating, aufgebracht. Diese Beschichtung muß sehr dünn, sehr gleichmäßig und von hoher optischer Qualität sein. Zusätzlich muß sie im Bereich der Lichtquelle stark absorbieren. Als Lichtquelle werden Laser verwendet, vorzugsweise Laserdioden, die im Wellenlängenbereich 700 bis 1,400 nm arbeiten.

Die Herstellung von solchen Beschichtungen und die Verwendung zur optischen Aufzeichnung ist beispielsweise in WO 84/02795 und EP 0 023 736 beschrieben.

Wegen ihrer ausgeprägten Absorption im Bereich 750 bis 950 nm sind die Tetraindolylheptamethinfarbstoffe der Formel X für die Verwendung in optischen Aufzeichnungsmaterialien besonders gut geeignet. Ebenfalls geeignet sind Mischungen. Sie sind in den zur Beschichtung gebräuchlichen Lösungsmitteln gut löslich Solche Lösungsmittel sind beispielsweise chlorierte Kohlenwasserstoffe, z.B. Methylenchlorid, 1,2-Dichlorethan; Ketone, z.B. 2-Butanon, Cyclohexanon; Aromaten, z.B. Xylol; Ester, z.B. Essigsäureethyl- oder -butylester; Alkohole, z.B. Methanol, Ethanol oder Butanol oder Mischungen hiervon. Bevorzugt sind die Alkohole, da sie die Kunststoffplatte nicht angreifen.

Geeignete Bindemittel sind alle filmbildenden Materialien, vorzugsweise Polymeren, z.B. Polystyrol, Poly-$\alpha$-methylstyrol, Polymethylmethacrylat, Polyvinylchlorid, Polyvinylacetat, Polyvinylacetat/-vinylpyrrolidon, Polycarbonat, Cellulosenitrat, Celluloseacetatbutyrat oder Mischungen oder Copolymere hiervon.

Beispiel 1

21,9 g 1,1-Bis-(1-methyl-2-phenyl-indol-3-yl)-ethen und 4,3 g 1,1,3,3-Tetramethoxypropan werden in einer Mischung aus 50 ml Acetanhydrid und 2,5 g Methansulfonsäure 1 Stunde bei 80 °C verrührt. Die schwarzblaue Lösung, die den Farbstoff dar Formel

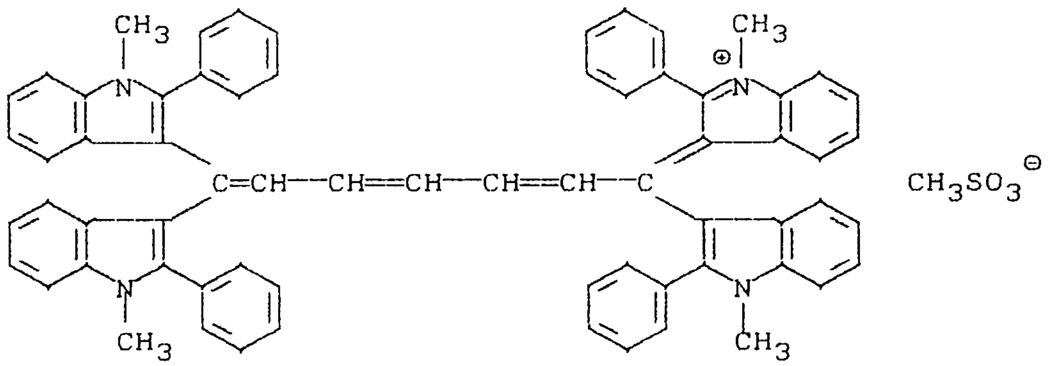

enthält, wird auf
200 ml Methanol ausgetragen und mit 50 ml 30 %iger methanolischer Natriummethylatlösung alkalisch gestellt. Das beigebraune Produkt wird abgesaugt, mit Methanol und Wasser gewaschen und getrocknet:
22,0 g (94,6 % der Theorie). Das Produkt wird in 200 ml Methanol 2 Stunden gekocht, abgekühlt, abgesaugt und getrocknet:
18,5 g (79,6 %) bräunlich-beiges Pulver vom Schmelzpunkt 216-218 °C.

In einer isomeren Form entspricht das Produkt der Formel:

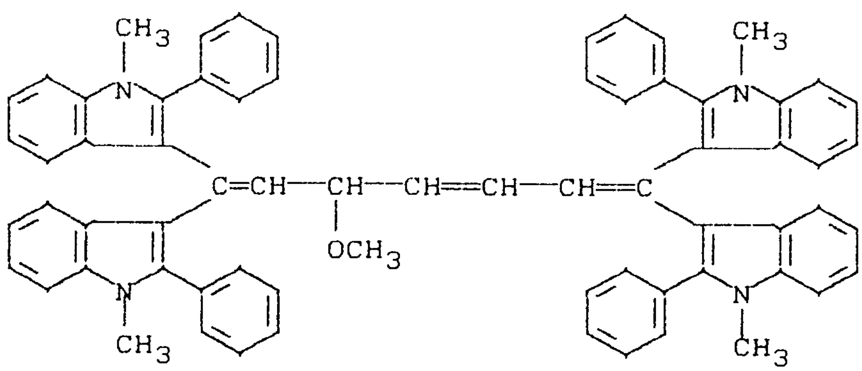

Eine Lösung in Eisessig zeigt eine schmutzig-blaue Farbe und $\lambda_{max}$ = 863 nm. Eine Lösung in Toluol entwickelt auf Säureton eine blasse graublaue Färbung.

Im Infrarot läßt sich eine Absorption von 750 bis 950 nm messen.

Analog lassen sich die folgenden Beispiele herstellen;

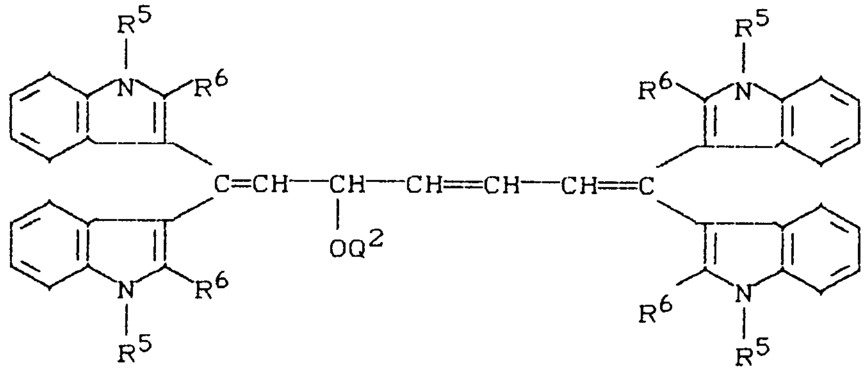

| Beispiel | $R^5$ | $R^6$ | $Q^2$ | $\lambda_{max}$ in Eisessig |
|---|---|---|---|---|
| 2 | $-C_2H_5$ | 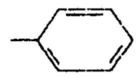 | $-CH_3$ | 864 nm |
| 3 | $n-C_4H_9$ | 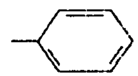 | $-CH_3$ | 867 nm |
| 4 | $n-C_8H_{17}$ | 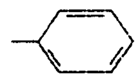 | $-CH_3$ | 867 nm |
| 5 | $-CH_2-$ 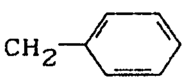 | 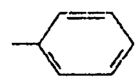 | $-CH_3$ | 874 nm |
| 6 | $-CH_3$ | 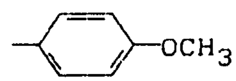 | $-CH_3$ | 870 nm |
| 7 | $-CH_3$ | 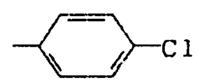 | $-CH_3$ | 865 nm |

| Beispiel | $R^5$ | $R^6$ | $Q^2$ | $\lambda_{max}$ in Eisessig |
|---|---|---|---|---|
| 8 | $-CH_3$ | 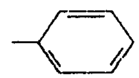 | $-C_2H_5$ | 862 nm |
| 9 | $-CH_3$ | 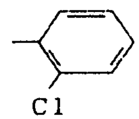 | $-C(CH_3)_3$ | 859 nm |
| 10 | $-CH(CH_3)_2$ | 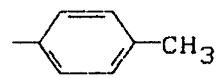 | $n-C_4H_9$ | 867 nm |
| 11 | $-CH_3$ | 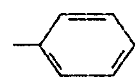 | $-CH_2$ 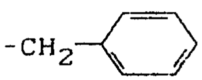 | 863 nm |
| 12 | $-CH_3$ | $-CH_3$ | $-CH_3$ | 818 nm |
| 13 | $-CH_2$ 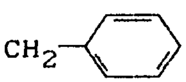 | $-CH_3$ | $-CH_3$ | 824 nm |

| Beispiel | $R^5$ | $R^6$ | $Q^2$ | $\lambda_{max}$ in Eisessig |
|---|---|---|---|---|
| 14 | $-CH_3$ | $n-C_4H_9$ | $-CH_3$ | 820 nm |
| 15 | $-CH_3$ | $n-C_8C_{17}$ | $-CH_3$ | 820 nm |
| 16 | $-CH_2CH_2CN$ | 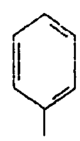 | $-CH_3$ | 852 nm |
| 17 | $-CH_2CH_2OCH_3$ | $n-C_6H_{13}$ | $-C_2H_5$ | 825 nm |

Beispiel 18

21,9 g 1,1-Bis-(1-methyl-2-phenyl-indol-3-yl)-ethen und 4,3 g 1,1,3,3-Tetramethoxy-propan werden in einer Mischung aus 100 ml Butanol und 5 g konz. Salzsäure 1 Stunde gekocht.

Es liegt nun eine Lösung des Farbstoffes der Formel

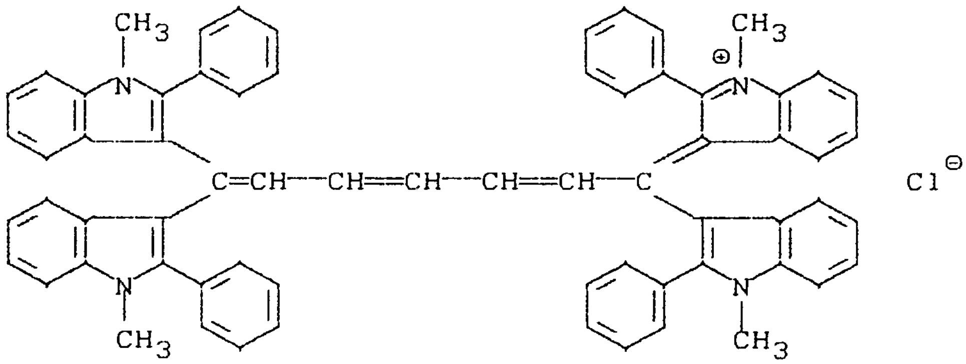

vor, die zur Herstellung von optischen Aufzeichnungsmaterialien verwendet werden kann. Durch Abziehen des Lösungsmittels kann der Farbstoff isoliert werden.

Zur Isolierung des Ethers kühlt man ab und tropft 38 ml einer 2 molaren butanolischen Kaliumbutylatlösung zu. Es wird abgesaugt, mit Butanol und Hexan gewaschen und getrocknet. Das bräunliche Produkt wird am Heißextraktor mit Methylcyclohexan extrahiert, wobei die ersten Anteile verworfen werden, Man erhält so 10,5 g (42,6 %) eines blaßbeigen Pulvers vom Schmelzpunkt 202 bis 205 °C.

In einer isomeren Form entspricht es der Formel

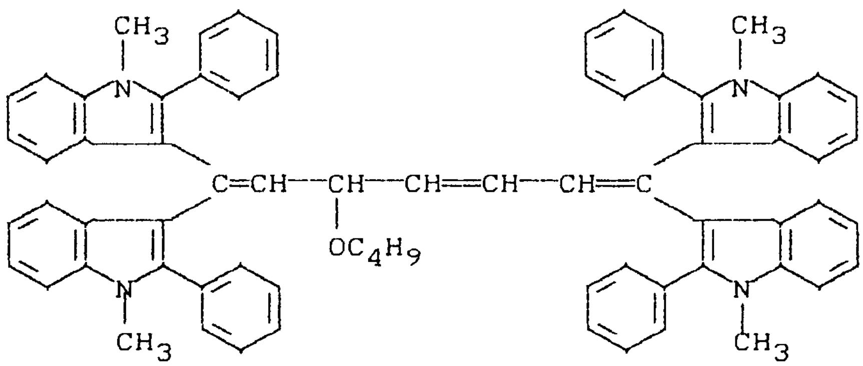

$\lambda_{max}$ in Eisessig; 860 nm.
Auf Säureton: Graublau, 750 bis 950 nm.

Analog lassen sich die folgenden Beispiele herstellen:

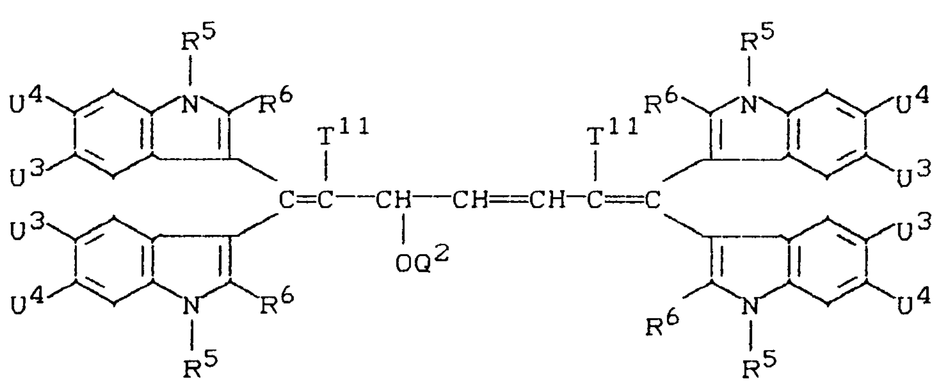

| Beispiel | $R^5$ | $R^6$ | $Q^2$ | $U^3$ | $U^4$ | $T^{11}$ | $\lambda_{max}$ in Eisessig |
|---|---|---|---|---|---|---|---|
| 19 | $-CH_3$ | 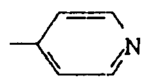 | $-C_2H_5$ | H | H | H | 857 nm |
| 20 | $-CH_2-CH=CH_2$ | 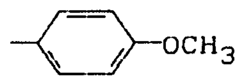 | $n-C_4H_9$ | H | H | $CH_3$ | 872 nm |
| 21 | $-CH_3$ | 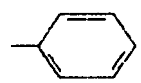 | $n-C_8H_{17}$ | H | Cl | H | 865 nm |
| 22 | $-CH_3$ | 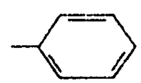 | 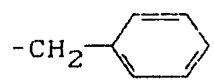 | $-OCH_3$ | H | H | 870 nm |
| 23 | $-CH_3$ | 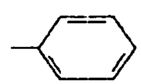 | 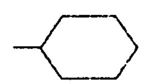 | $-CH_3$ | $-CH_3$ | H | 865 nm |

| Beispiel | $R^5$ | $R^6$ | $Q^2$ | $U^3$ | $U^4$ | $T^{11}$ | $\lambda_{max}$ in Eisessig |
|---|---|---|---|---|---|---|---|
| 24 | $-C_2H_5$ | 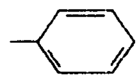 | $CH_3$ | $-CH_3$ | H | H | 864 nm |
| 25 | $CH_3$ | 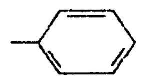 | $CH_3$ | H | H | $CH_3$ | 862 nm |
| 26 | $CH_3$ | 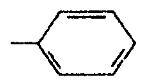 | $CH_3$ | H | H | $-CH_2CH_2Cl$ | 867 nm |
| 27 | $CH_3$ | 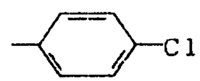 | $C_2H_5$ | Cl | H | $-C_2H_5$ | 863 nm |
| 28 | $CH_3$ | $CH_3$ | $-CH(CH_3)_2$ | H | H | 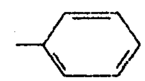 | 800 nm |
| 29 | H | $CH_3$ | $CH_3$ | H | H | CN | 791 nm |
| 30 | $CH_3$ | 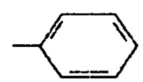 | $CH_3$ | H | H | Cl | 900 nm |

| Beispiel | $R^5$ | $R^6$ | $Q^2$ | $U^3$ | $U^4$ | $T^{11}$ | $\lambda_{max}$ in Eisessig |
|---|---|---|---|---|---|---|---|
| 31 | $CH_3$ | H | $n-C_3H_7$ | H | H | $-CH_2CH_2CN$ | 815 nm |
| 32 | $-CH_2$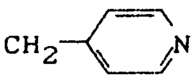 | 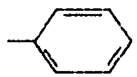 | $CH_3$ | H | H | H | 870 nm |
| 33 | $CH_3$ | 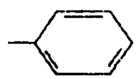 | $C_2H_5$ | $NO_2$ | H | H | 858 nm |
| 34 | $-CH_2$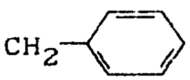 | $CH_3$ | $-C(CH_3)_3$ | H | CN | H | 830 nm |

Beispiel 35

21,9 g 1,1-Bis-(1-methyl-2-phenyl-indol-3-yl)-ethen und 7,35 g Dimethyl-(3-chlor-3-phenyl-prop-2-en-1-yliden)-ammoniumperchlorat werden in 50 ml Acetanhydrid 1,5 Stunden gekocht. Es wird abgekühlt und in

250 ml Methanol ausgetragen. Dabei fällt der Farbstoff der Formel

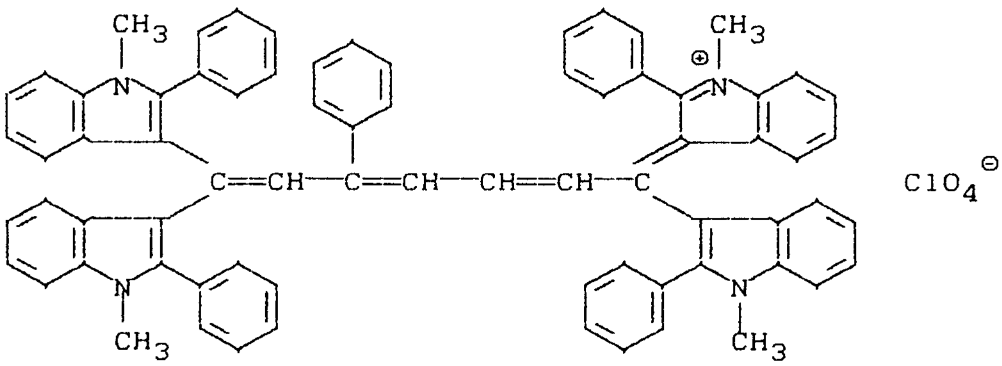

als schwarzes Pulver aus. Diese Suspension wird nun mit methanolischer Natriummethylatlösung alkalisch gestellt. Das dunkelbraune Pulver wird abgesaugt, mit Wasser gewaschen und getrocknet. Es wird in Acetonitril heiß gelöst, filtriert, abgekühlt und abgesaugt; 3,0 g (11,8 %) braunes Pulver, In einer isomeren Form entspricht es der Formel

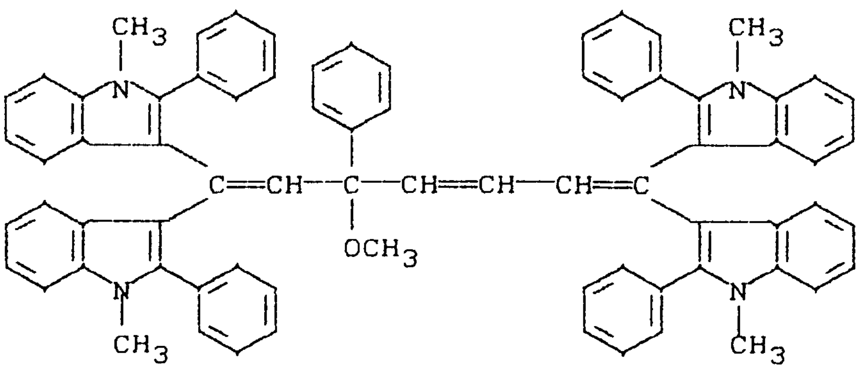

$\lambda_{max}$ in Eisessig; 897 nm.

Analog lassen sich die folgenden Beispiele herstellen:

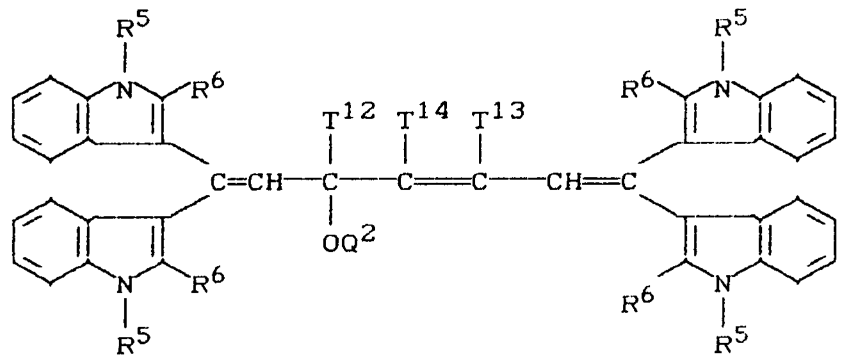

| Beispiel | $R^5$ | $R^6$ | $Q^2$ | $T^{12}$ | $T^{13}$ | $T^{14}$ | $\lambda_{max}$ in Eisessig |
|---|---|---|---|---|---|---|---|
| 36 | $-CH_3$ | 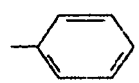 | $-CH_2-C(CH_3)_3$ | 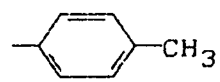 | H | H | 895 nm |
| 37 | $-CH_3$ | 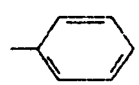 | $-C_2H_5$ | 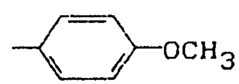 | H | H | 885 nm |
| 38 | $-CH_3$ | 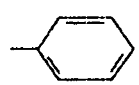 | $-CH_3$ | 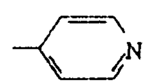 | H | H | 905 nm |

| Beispiel | $R^5$ | $R^6$ | $Q^2$ | $T^{12}$ | $T^{13}$ | $T^{14}$ | in Eisessig |
|---|---|---|---|---|---|---|---|
| 39 | $-CH_3$ | 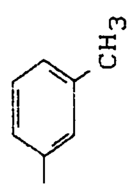 | $-CH_3$ | 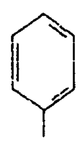 | Cl | H | 900 nm |
| 40 | $-C_2H_5$ | 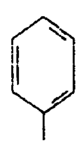 | $-CH_3$ | $-N(CH_3)_2$ | H | H | 770 nm |
| 41 | $-CH_3$ | 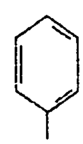 | $-CH_3$ | 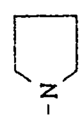 | H | 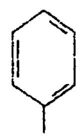 | 802 nm |
| 42 | $n-C_4H_9$ | 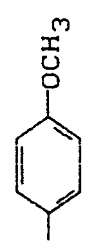 | $CH_3$ | 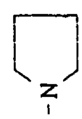 | $-(CH_2)_3-$ | | 765 nm |

Beispiel 43

21,9 g 1,1-Bis-(1-methyl-2-phenylindol-3-yl)-ethen und 8,1 g Dimethyl-(3-dimethylamino-2-(4-pyridyl)-2-propen-1-yliden)-ammoniumchlorid werden in einer Mischung aus 50 ml Acetanhydrid und 2,9 g Methansulfonsäure 37 Stunden gekocht. Nach dem Abkühlen wird auf 250 ml Methanol ausgetragen. Man erhält so eine blaue Lösung, die den Farbstoff der Formel

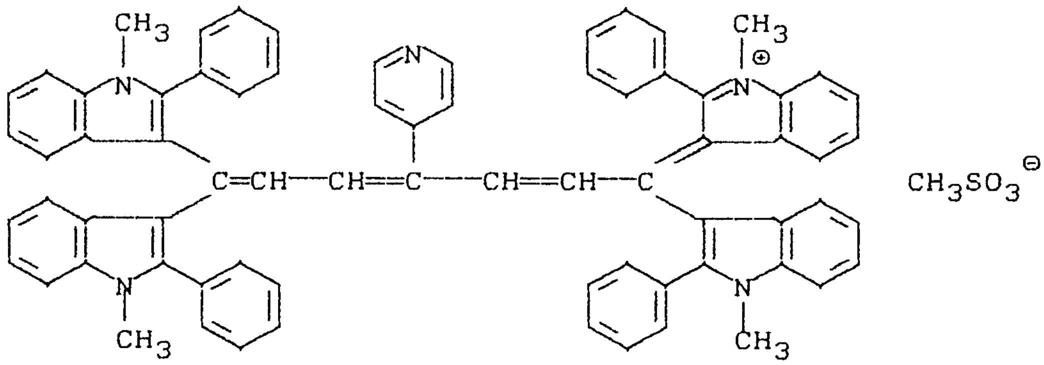

enthält. Sie wird mit 125 ml 30 %iger methanolischer Natriummethylatlösung versetzt. Man erhält 20,0 g (78,3 %) eines bräunlichen Pulvers. In einer isomeren Form entspricht es der Formel:

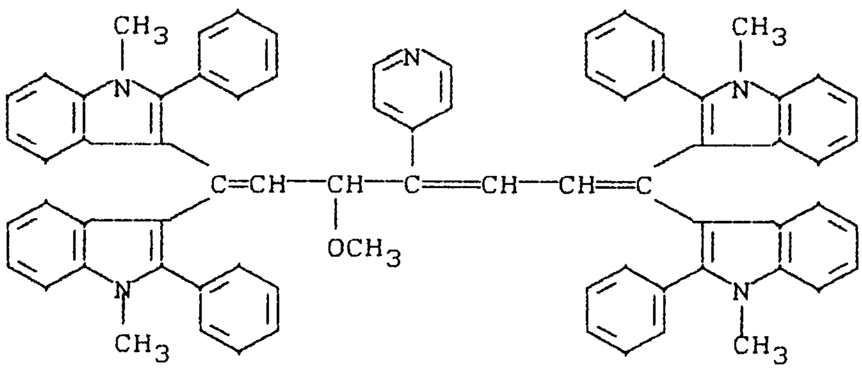

$\lambda_{max}$ in Eisessig: 850 nm.

Analog lassen sich die folgenden Beispiele herstellen:

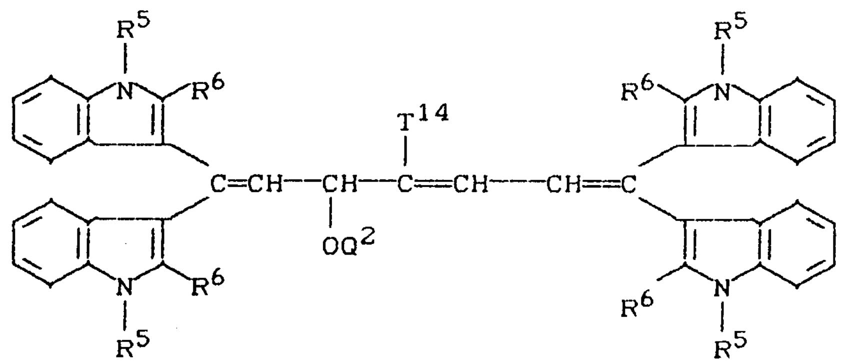

| Beispiel | $R^5$ | $R^6$ | $Q^2$ | $T^{14}$ | $\lambda_{max}$ in Eisessig |
|---|---|---|---|---|---|
| 44 | $-CH_3$ | 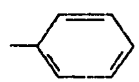 | $n-C_4H_9$ | 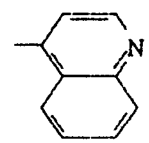 | 856 nm |
| 45 | $-C_2H_5$ | 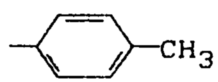 | $-CH_3$ | 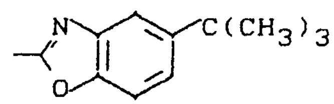 | 860 nm |
| 46 | $-CH_2$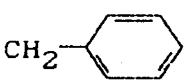 | $-C_2H_5$ | $-CH_3$ | -CN | 800 nm |

Beispiel 47

21,9 g 1,1-Bis-(1-methyl-2-phenyl-indol-3-yl)-ethen und Natrium-(2-(benzthiazol-2-yl)-3-oxo-prop-1-en-1-olat) werden in einer Mischung aus 50 ml Acetanhydrid und 7,7 g Trifluormethansulfonsäure 1 Stunde bei 90 ° C verrührt Nach dem Abkühlen wird die grünlichblaue Losung, die den Farbstoff der Formel

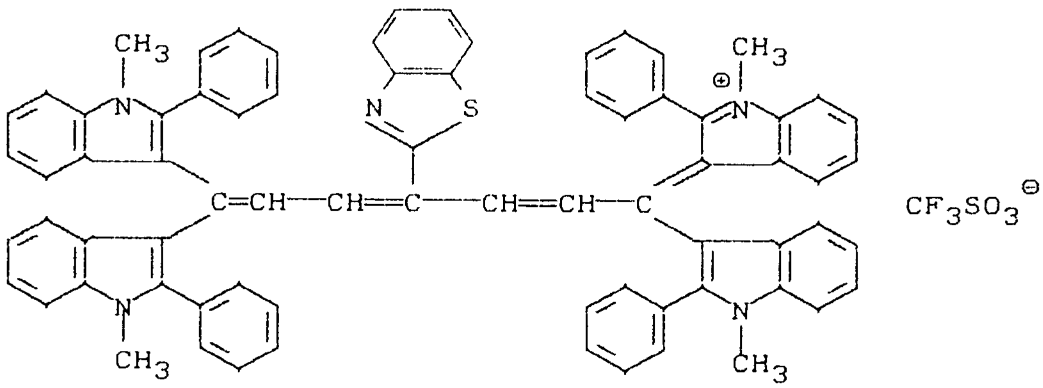

enthält, auf 250 ml Methanol ausgetragen und mit methanolischer Methylatlösung alkalisch gestellt. Es wird abgesaugt, mit Methanol und Wasser gewaschen. Durch Umkristallisieren aus Butanol erhält man 22,3 g (82,8 %) gelbes Pulver vom Schmelzpunkt 217 bis 219 ° C. In einer isomeren Form entspricht das Produkt der Formel

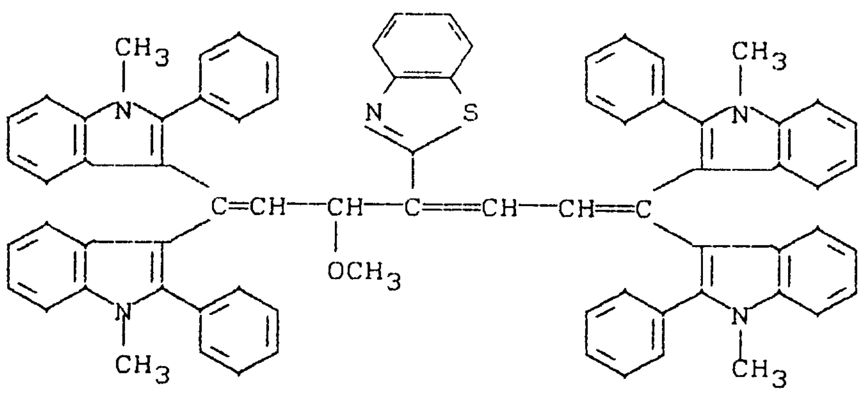

$\lambda_{max}$ in Eisessig: 859 nm.
Auf Säureton; grünlichgrau, 750 bis 950 nm.

Analog lassen sich die folgenden Beispiele herstellen:

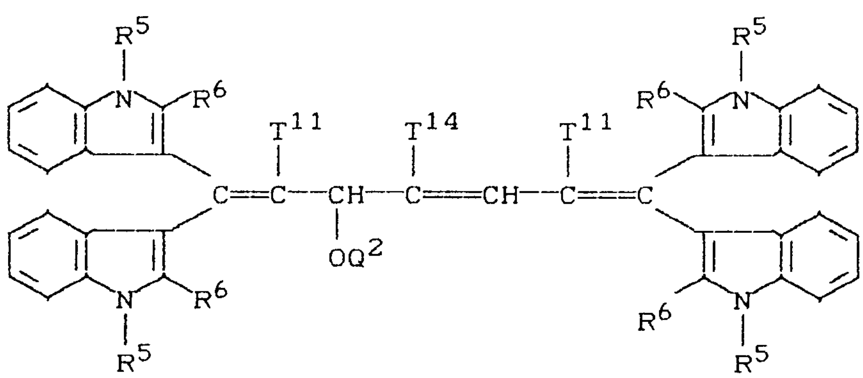

| Beispiel | $R^5$ | $R^6$ | $Q^2$ | $T^{11}$ | $T^{14}$ | $\lambda_{max}$ in Eisessig |
|---|---|---|---|---|---|---|
| 48 | $-CH_2$ 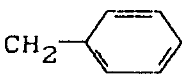 | $-CH_3$ | $-CH_3$ | $-CH_3$ | 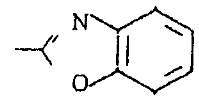 | 815 nm |
| 49 | $-CH_3$ | 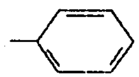 | $-CH_2$ 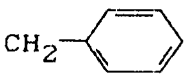 | H | 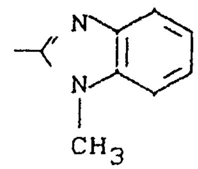 | 858 nm |
| 50 | $-CH_3$ | 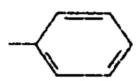 | $-CH(CH_3)_2$ | H | -CN | 800 nm |
| 51 | $-CH_3$ | 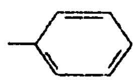 | 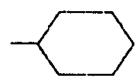 | H | 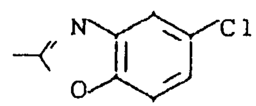 | 859 nm |
| 52 | $-C_2H_5$ | 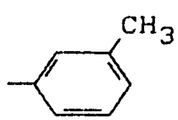 | $-CH_3$ | H | 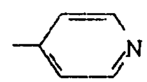 | 851 nm |

| Beispiel | $R^5$ | $R^6$ | $Q^2$ | $T^{11}$ | $T^{14}$ | $\lambda_{max}$ in Eisessig |
|---|---|---|---|---|---|---|
| 53 | $-CH_3$ | 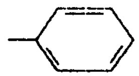 | $n-C_4H_9$ | $-CH_3$ | 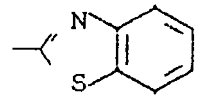 | 859 nm |
| 54 | $-CH_3$ | 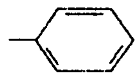 | $-CH_3$ | H | 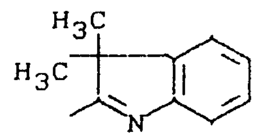 | 857 nm |
| 55 | $-CH_3$ | 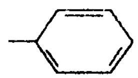 | $-CH_3$ | H | 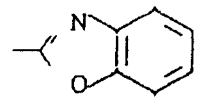 | 858 nm |
| 56 | $-CH(CH_3)_2$ | 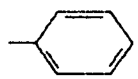 | $-C_2H_5$ | H | 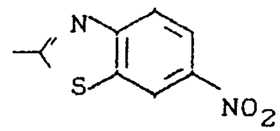 | 859 nm |
| 57 | $-CH_3$ | 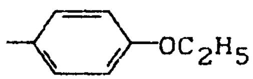 | $-CH_3$ | H | $-CH_3$ | 857 nm |
| 58 | $-CH_3$ | 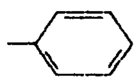 | $-CH_3$ | H | -Br | 869 nm |

## Beispiel 59

21,9 g 1,1-Bis-(1-methyl-2-phenyl-indol-3-yl)-ethen und 4,4 g 2,3-Dichlormaleinaldehydsäure werden in einer Mischung aus 50 ml Eisessig, 5,2 g Acetanhydrid und 0,9 g Piperidin 4 Stunden gekocht. Nach dem

Abkühlen wird die blaue Lösung, die den Farbstoff der Formel

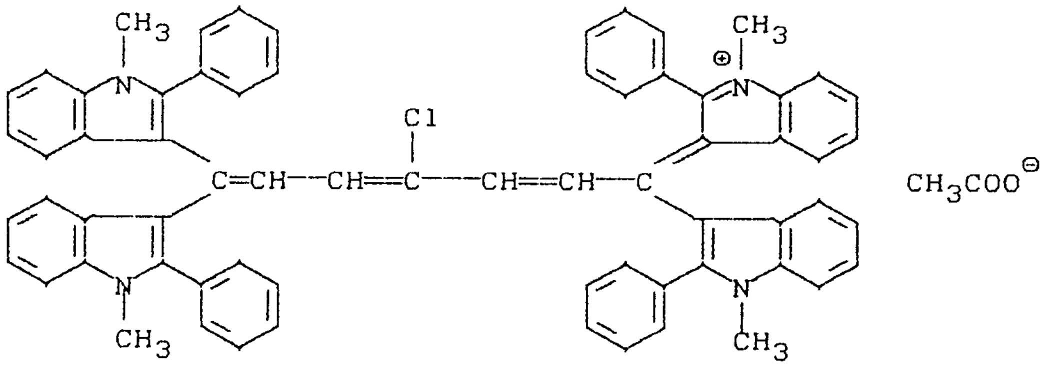

enthält, auf 200 ml Methanol ausgetragen und mit methanolischer Natriummethylatlösung alkalisch gestellt. Es wird abgesaugt, mit Methanol und Wasser gewaschen und getrocknet. Man erhält 19,5 g (79,7 %) bräunliches Pulver. In einer isomeren Form entspricht es der Formel:

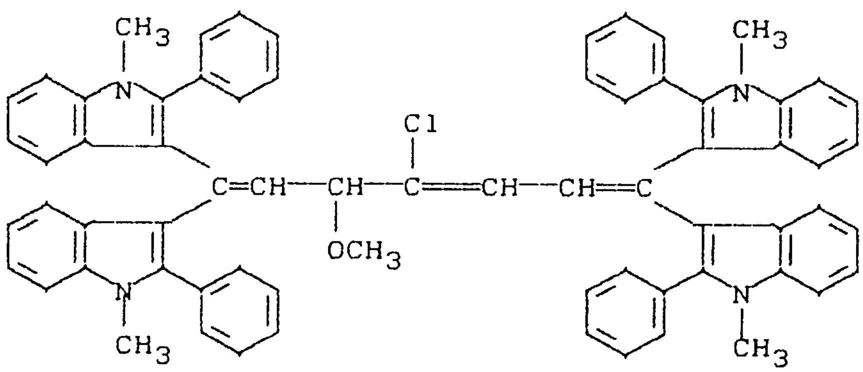

$\lambda_{max}$ in Eisessig: 874 nm.
Auf Säureton: grünlichgrau, 750 bis 950 nm.

Beispiel 60

21,9 g 1,1-Bis-(1-methyl-2-phenyl-indol-3-yl)-ethen und 7,39 g 1,1,3,3-Tetramethoxycyclohexan werden in einer Mischung aus 50 ml Acetanhydrid und 2,5 g Methansulfonsäure 1 Stunde gekocht. Nach dem Abkühlen wird die blaue Lösung, die den Farbstoff der Formel

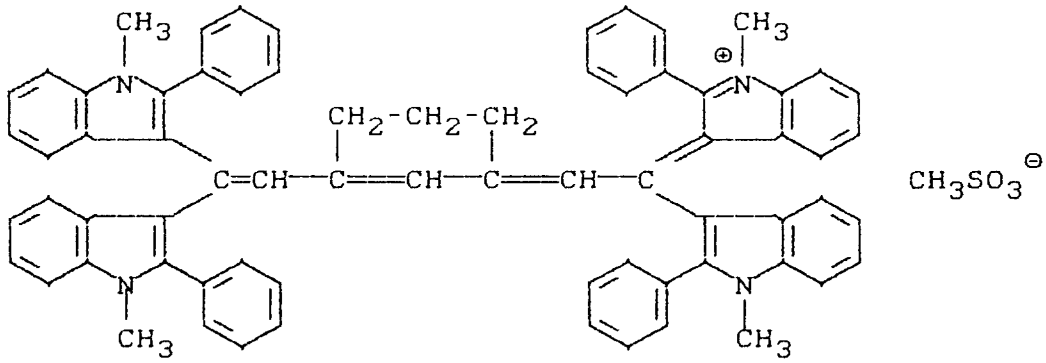

enthält, auf 200 ml Methanol ausgetragen und mit ethanolischer Natriummethylatlösung alkalisch gestellt. Es wird abgesaugt, mit Ethanol und Wasser gewaschen und getrocknet. Man erhält 17,3 g (69,5 %) bräunlich ockerfarbenes Pulver. In einer isomeren Form entspricht es der Formel:

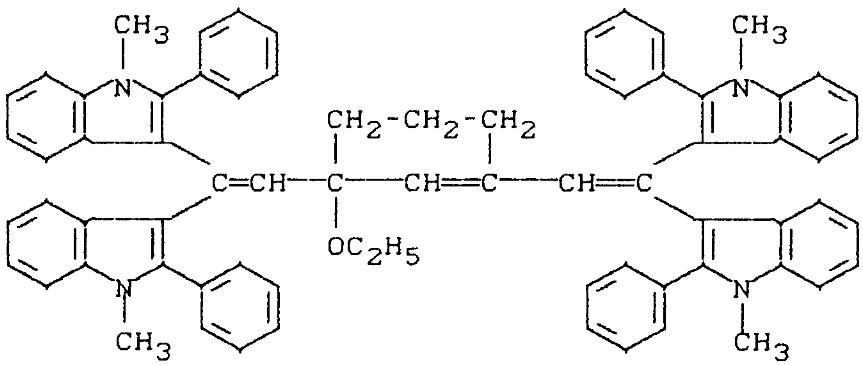

$\lambda_{max}$ in Eisessig: 796 nm.

Analog lassen sich die folgenden Beispiele herstellen:

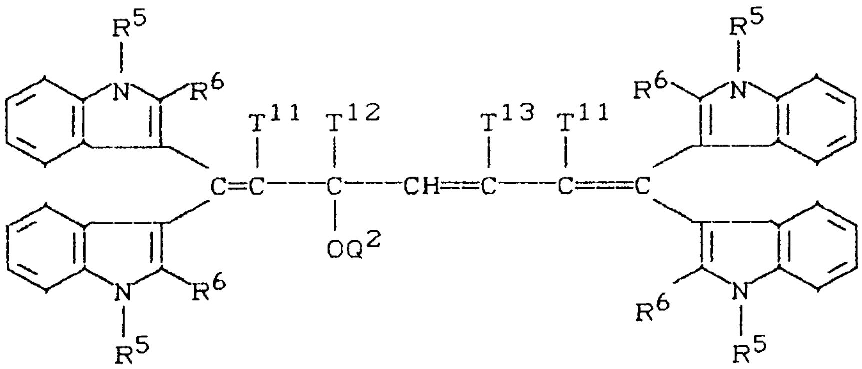

| Beispiel | $R^5$ | $R^6$ | $Q^2$ | $T^{11}$ | $T^{12}$ $T^{13}$ | $\lambda_{max}$ in Eisessig |
|---|---|---|---|---|---|---|
| 61 | $-CH_3$ | 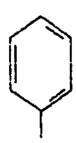 | $-CH_3$ | H | 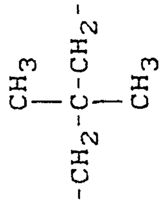 | 797 nm |
| 62 | $-CH_3$ | 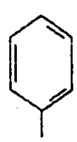 | $-CH_3$ | H | 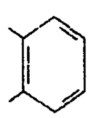 | 794 nm |
| 63 | $n-C_4H_9$ | 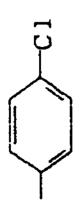 | $-CH_3$ | H | $-CH_2-CH_2-$ | 803 nm |
| 64 | $-CH_3$ | 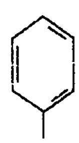 | $-C_2H_5$ | $-CH_3$ | 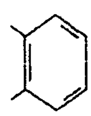 | 795 nm |
| 65 | $-CH_3$ | $n-C_4H_9$ | 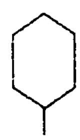 | H | 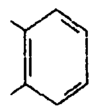 | 760 nm |
| 66 | $-CH_3$ | 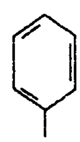 | $-CH_3$ | H | $-CH_3-CH_3$ | 798 nm |
| 67 | $-CH_3$ | 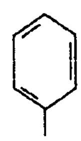 | $-CH_3$ | H | $H-CH_3$ | 880 nm |

Beispiel 68

3,35 g 1,1,3-Tris-(1-methyl-2-phenyl-indol-3-yl)-1,3-butadien und 2,33 g 1,1-Bis-(1-methyl-2-phenyl-indol-3-yl)-1-propen-3-al werden in einer Mischung aus 30 ml Acetanhydrid, 5 ml Eisessig und 0,5 g

Ethansulfonsäure 10 Stunden bei 80 bis 90 °C gerührt. Nach dem Erkalten wird die blaue Lösung, die den Farbstoff der Formel

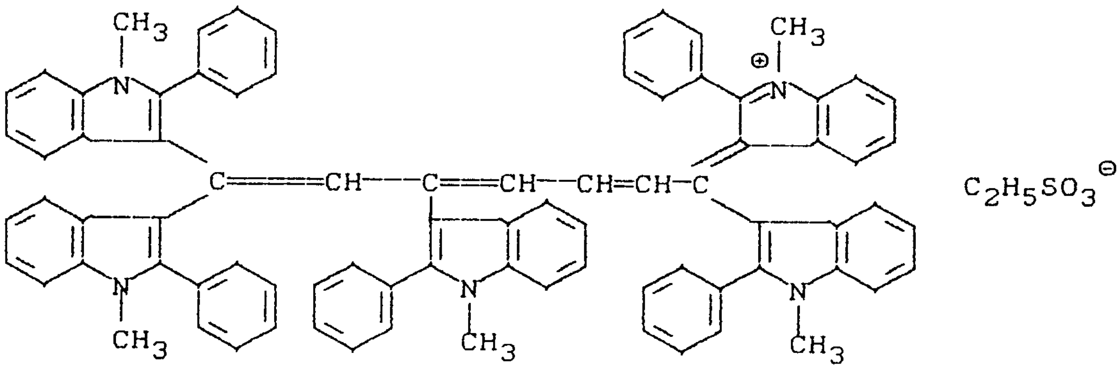

enthält, auf 150 ml Methanol ausgetragen und mit 170 ml 30 %iger methanolischer Natriummethylatlösung bei 40 bis 45 °C alkalisch gestellt. Es wird abgesaugt, mit Methanol und Wasser gewaschen und getrocknet. Man erhält 3,3 g (57,3 % der Theorie) beiges Pulver vom Schmelzpunkt 198 bis 200 °C (Zers.). In einer isomeren Form entspricht das Produkt der Formel

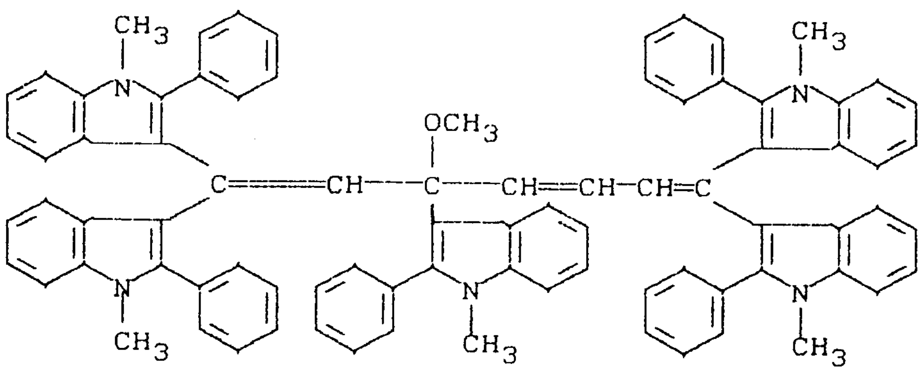

$\lambda_{max}$ in Eisessig: 876 nm.
Auf Säureton: blaustichig grau, 750 bis 950 nm.

Beispiel 69

9,3 g 1,1-Bis-(1-methyl-2-phenyl-indol-3-yl)-1-propen-3-al und 1,0 g Malonsäure werden in 30 ml Phosphoroxychlorid 90 Minuten refluxiert. Nach Abkühlen wird in 500 ml Wasser ausgetragen, 30 Minuten verrührt, abgesaugt und getrocknet: 10,4 g. Der so erhaltene Farbstoff der Formel

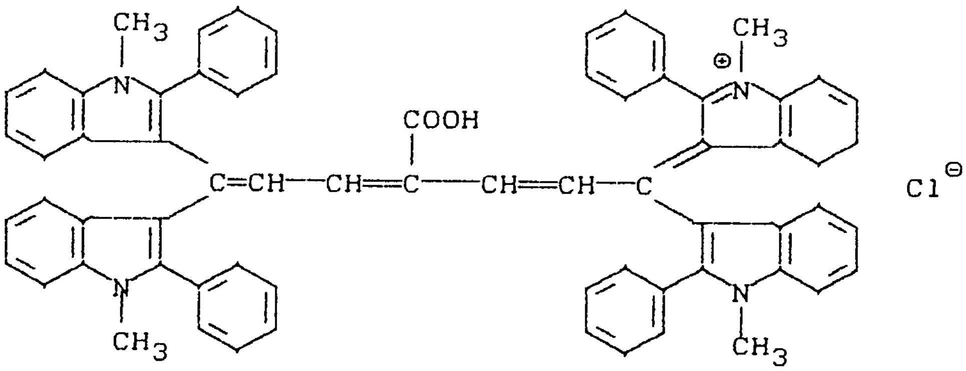

wird in 100 ml Ethanol aufgenommen und mit Natriumethylatlösung alkalisch gestellt. Man erhält 7,4 g (72 %) braunbeiges Pulver. In einer isomeren Form entspricht es der Formel:

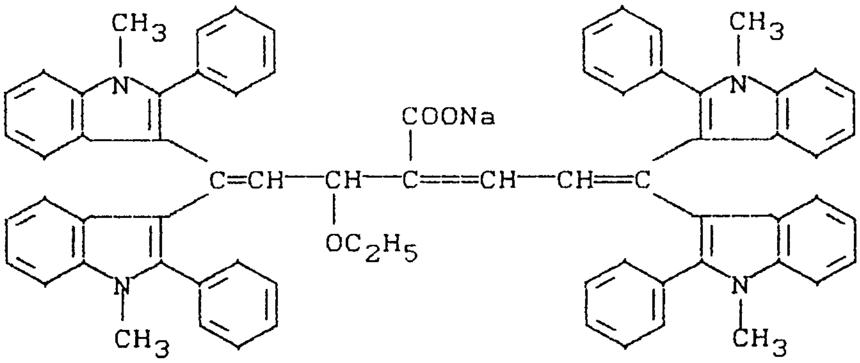

$\lambda_{max}$ in Eisessig: 843 nm.

Beispiel 70

11,3 g 1,1-Bis-(1-methyl-2-phenyl-indol-3-yl)-propen, 12,5 g 1,1-Bis-(1-methyl-2-(4-methoxy-phenyl)-indol-3-yl)-ethenund 4,3 g 1,1,3,3-Tetramethoxy-propan werden wie in Beispiel 1 umgesetzt. Man erhält 19,4 g bräunlich-beiges Pulver, das aus einer Mischung (ca. 3:3:1) der Produkte der Beispiele 6, 25 und der Verbindung der Formel (in einer isomeren Form)

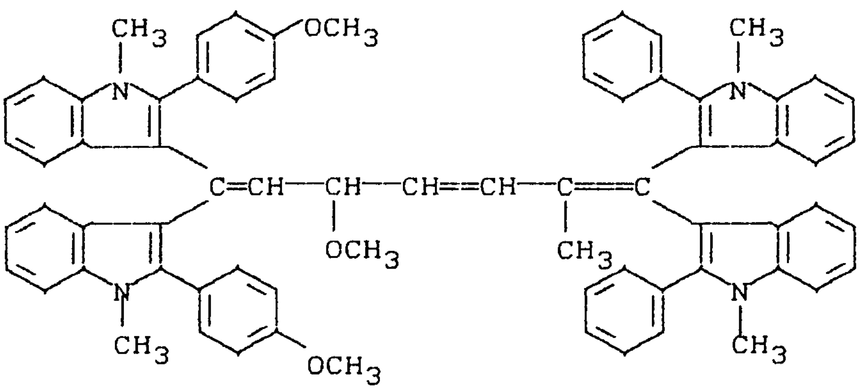

besteht.

$\lambda_{max}$ in Eisessig: 866 nm.

Auf Säureton; Grünlich-grau, 750 bis 950 nm.

Beispiel 71

Es wird wie in Beispiel 1 verfahren. Die schwarzblaue Lösung wird jedoch auf 200 ml 1-Butanol ausgetragen. Während 1,5 Stunden werden 83,4 g Kalium-tert.-butylat eingestreut und gegen Ende der Zugabe 2 Stunden refluxiert. Nach dem Abkühlen wird abgesaugt und mit 1-Butanol und Hexan und dann mit Wasser gewaschen. Nach dem Trocknen erhält man 19,5 g (79,1 %) beiges Pulver vom Schmelzpunkt 213 bis 217 °C. Es enthält die Ether des Beispiels 18 und der Formel (in einer isomeren Form)

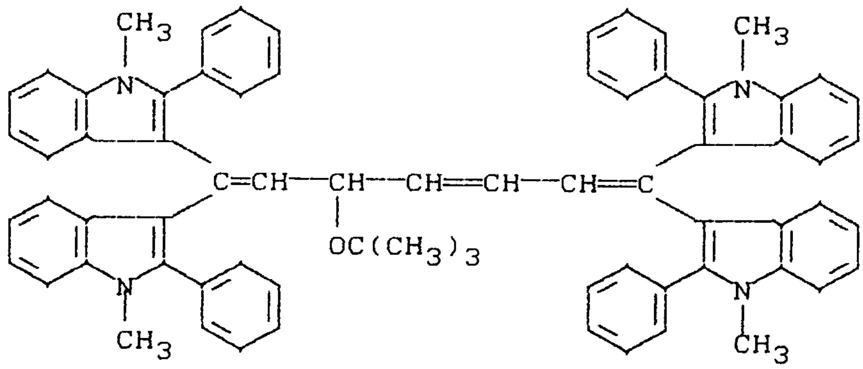

im Verhältnis ca. 85:15.
$\lambda_{max}$ in Eisessig: 860 nm.

Beispiel 72

3 g des Tetraindolylheptamethinethers des Beispiels 18 werden in einem Gemisch aus 40 g Dodecylbenzol und 60 g Chlorparaffin mit 45 % Cl-Gehalt (Marlican der Fa. Hüls) gelöst. 223 g einer solchen Lösung werden mit 39,5 g Oxadiazintrion von Desmodur H (NCO-Gehalt 20,5 %) vermischt. Anschließend erfolgt die Vermischung mit 320 g 0,5 %iger Polyvinylalkohollösung und die Emulgierung im Schergefälle eines Rotor/Stator-Emulgiergeräts. Die Vernetzung erfolgt mit 76 g 9,0 %iger Diethylentriaminlösung. Die Nachbehandlung erfolgt durch Erwärmen der Dispersion auf 60 °C und dreistündiges Rühren bei 60 °C. Es wird dabei eine 40 % Kapseln enthaltende Dispersion der Kapselgröße 7,3 µm erhalten.

250 ml dieser Dispersion wird vorgelegt und unter intensivem Rühren 40 g Cellulosefeinschliff (Arbocell BE 600/30 der Firma Rettenmeier und Söhne) langsam eingestreut. Nach mindestens 30-minütigem intensivem Rühren erfolgt die Zugabe von 40 ml 50 %iger SBR-Latex (Baystal D 1600 der Fa, BAYER AG). Die resultierende 48,5 %ige Streichfarbe wird mit Wasser auf 30 % Feststoffgehalt verdünnt und mit einer Luftbürste auf die Rückseite eines handelsüblichen Basis-Papiers gestrichen. Der Auftrag beträgt nach dem Trocknen 5 g/m$^2$.

Das so bestrichene Papier wird mit der beschichteten Seite auf die mit Entwicklersubstanz beschichtete Seite eines handelsüblichen kohlefreien Durchschreibepapiers gelegt. Bei Ausführung eines Schreibdruckes auf das mit Kapseln beschichtete Papier ergibt sich auf dem Durchschreibepapier eine graublaue Durchschrift, die im nahen Infrarotbereich von 750 bis 950 nm eine intensive Absorption besitzt.

Analog lassen sich auch die anderen Beispiele verwenden.

Beispiel 73

Eine Lösung aus 2 g des Tetraindolylheptamethinethers des Beispiels 6 und 3 g eines Benzoxazins der Formel

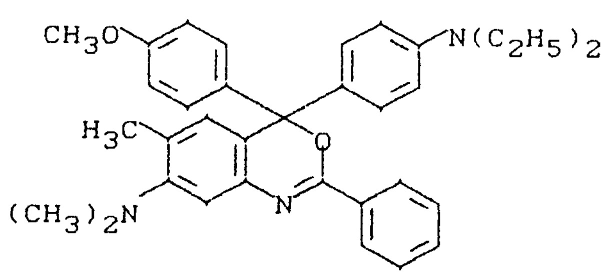

wie es in EP 187 329 beschrieben ist, in 80 g Diisopropylnaphthalin und 17 g Kerosin wird auf an sich bekannte Weise mit Gelatine und Gummiarabicum durch Koazervation mikroverkapselt, mit Stärkelösung vermischt und auf ein Blatt Papier gestrichen. Dieses Blatt wird mit der beschichteten Seite auf die mit Entwicklersubstanz beschichtete Seite eines handelsüblichen kohlefreien Durchschreibepapiers gelegt. Bei Ausübung eines Schreibdrucks auf das mit Kapseln beschichtete Papier ergibt sich auf dem Durchschreibepapier eine intensive schwarze Durchschrift, die im nahen Infrarot von 750 bis 950 nm ebenfalls eine intensive Absorption besitzt.

Beispiel 74

In einer Kugelmühle werden 32 g 4,4'-Isopropyliden-diphenol (Bisphenol A), 3,8 g Distearylamid des Ethylendiamins, 89 g Kaolin, 20 g eines zu 88 % hydrolysierten Polyvinylalkohols und 55 ml Wasser gemahlen, bis die Teilchengröße ca. 5 µm beträgt. In einer zweiten Kugelmühle werden 6 g des Tetraindolylheptamethinethers des Beispiels 58, 3 g eines zu 88 % hydrolysierten Polyvinylalkohols und 60 ml Wasser zu einer Teilchengröße von ca. 3 µm gemahlen. Die beiden Dispersionen werden zusammengegeben und mit einem Trockenauftragsgewicht von 5,5 g/m$^2$ auf Papier gestrichen. Durch Berühren des Papiers mit einem erhitzten Kugelschreiber wird eine grünlich-graue Aufzeichnung entwickelt, die im nahen Infrarot von 750 bis 950 nm eine intensive Absorption zeigt.

Beispiel 75

9,44 g des Ethers des Beispiels 1 werden in 37 ml Methanol mit 0,96 g Methansulfonsäure versetzt und 5 Minuten refluxiert. Nach dem Erkalten erhält man eine stabile ca. 25 %ige methanolische Lösung des Farbstoffs der Formel

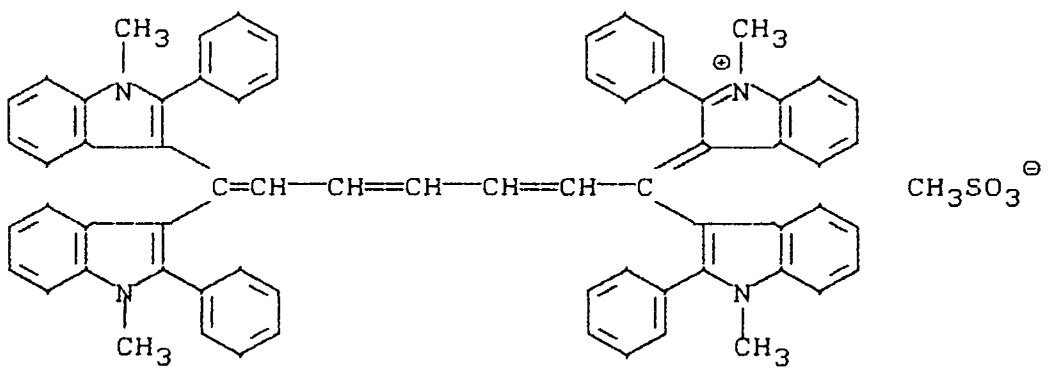

Sie ist nach Zusatz eines Binders und Einstellen der gewünschten Farbstoffkonzentration für die Herstellung optischer Aufzeichnungsmaterialien geeignet. Soll der Farbstoff isoliert werden, muß das Methanol im Vakuum abgezogen werden, Man erhält so 10,1 g (100 %) des obigen Farbstoffs als blaue Flitter vom Schmelzpunkt 192 bis 195 °C.

| | |
|---|---|
| Löslichkeit in Butanol: | >333 g/l. |
| Löslichkeit in Methanol: | >333 g/l. |

$\lambda_{max}$ in Eisessig: 863 nm.

Ganz analog kann mit den Beispielen 2 bis 71 verfahren werden, wobei nicht in allen Fällen eine so hoch konzentrierte methanolische Lösung stabil ist.

Beispiel 76

12,5 g des Ethers des Beispiels 5 werden in 40 ml Methanol mit 0,96 g Methansulfonsäure versetzt und 5 Minuten gekocht. Beim Abkühlen fällt ein feines blaues Pulver aus, das abgesaugt und getrocknet wird. Man erhält 12,1 g (92,4 %) des Farbstoffs der Formel

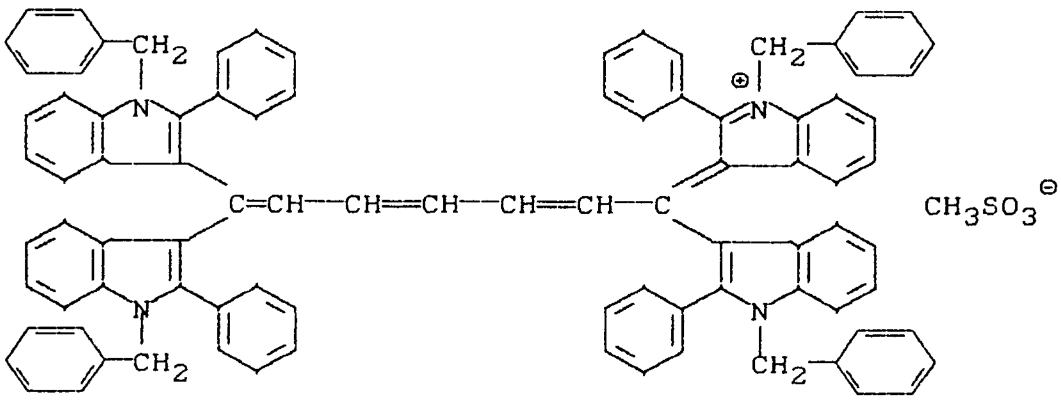

mit dem Schmelzpunkt 165 bis 168 ° C.

| | |
|---|---|
| Löslichkeit in Butanol: | >200 g/l. |
| Löslichkeit in Methylenchlorid: | >100 g/l. |

$\lambda_{max}$ in Eisessig: 874 nm.

Beispiel 77

21,9 g 1,1-Bis-(1-methyl-2-phenyl-indol-3-yl)-ethen, 4,3 g 1,1,3,3-Tetramethoxy-propan, 4,94 g kristallwasserhaltige p-Toluolsulfonsäure und 50 ml Acetanhydrid werden 1 bis 2 Stunden bei 80 bis 90 ° C gerührt. Nach dem Abkühlen wird auf 200 ml Methanol ausgetragen und 2 Stunden verrührt. Das Lösungsmittel wird im Vakuum komplett abgezogen. Man erhält so 10,8 g (100 %) blaue Flitter der Formel

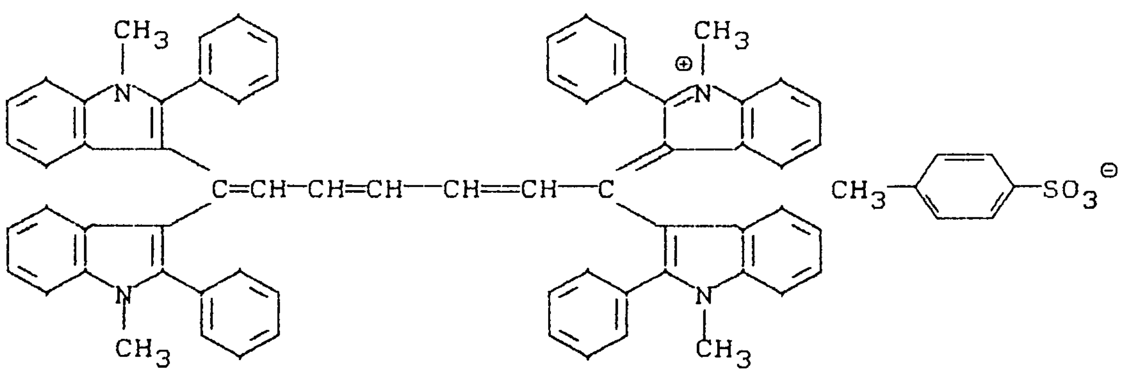

mit dem Schmelzpunkt 170 bis 173 ° C.

| | |
|---|---|
| Löslichkeit in Methanol: | >333 g/l. |
| Löslichkeit in Butanol: | >333 g/l. |

$\lambda_{max}$ in Eisessig: 863 nm.

Beispiel 78

26,1 g 1,1-Bis-(1-butyl-2-phenyl-indol-3-yl)-ethen, 4,3 g 1,1,3,3-Tetramethoxy-propan und 3,95 g Benzolsulfonsäure werden in 37 g n-Butanol 7 Stunden bei 80 bis 90 ° C verrührt. Man erhält so eine ca. 25 %ige butanolische Lösung des Farbstoffs der Formel

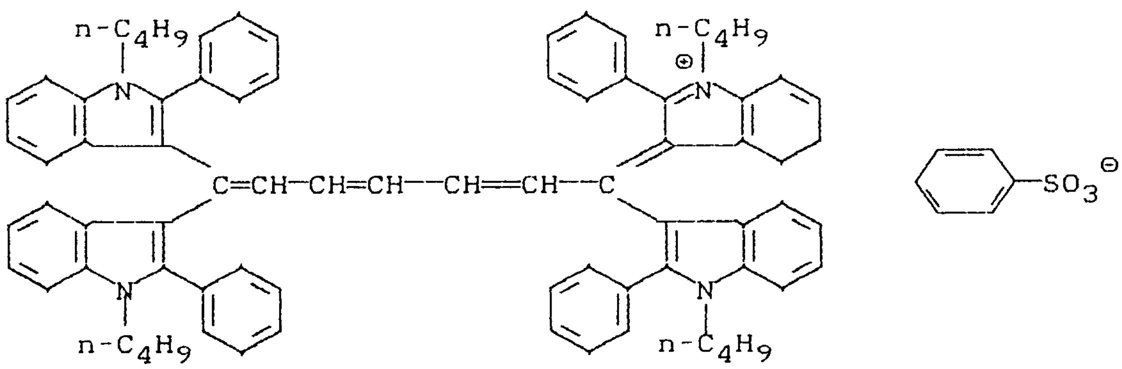

Sie ist nach Zusatz eines Binders und Einstellen der gewünschten Farbstoffkonzentration für die Herstellung optischer Aufzeichnungsmaterialien geeignet.

Beispiel 79

3,3 g des Ethers des Beispiels 47 werden zusammen mit 342 mg Trifluoressigsäure in 10 g Methanol 1 Stunde gekocht. Man erhält so eine ca. 25 %ige methanolische Lösung des Farbstoffs der Formel

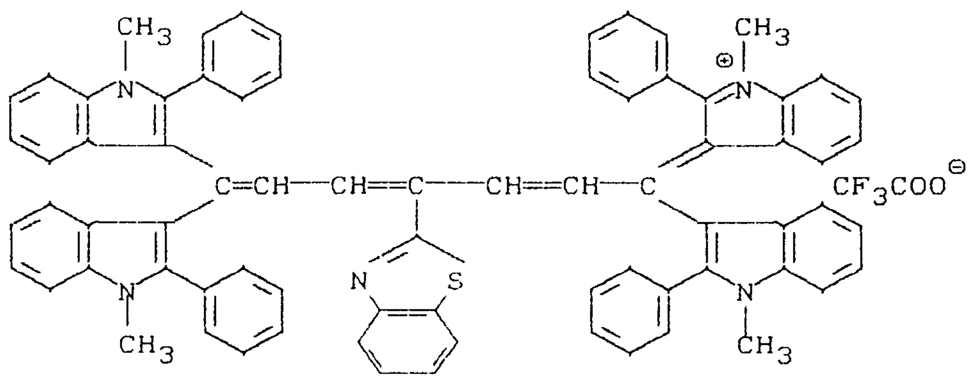

Sie ist nach Zusatz eines Binders und Einstellen der gewünschten Farbstoffkonzentration für die Herstellung optischer Aufzeichnungsmaterialien geeignet.

Soll der Farbstoff isoliert werden, muß das Methanol im Vakuum abgezogen werden Man erhält so 3,48 g (100 %) des obigen Farbstoffs als blaue Flitter vom Schmelzpunkt 155 bis 159 °C.

| | |
|---|---|
| Löslichkeit in Butanol: | >333 g/l. |
| Löslichkeit in Methanol: | >333 g/l. |

$\lambda_{max}$ in Eisessig: 859 nm.

Ganz analog kann mit den Beispielen 1 bis 46 und 48 bis 71 verfahren werden, wobei nicht in allen Fällen eine so hoch konzentrierte methanolische Lösung stabil ist.

Beispiel 80

Eine 5 %ige Lösung des Tetraindolylheptamethinfarbstoffs des Beispiels 78 in Butanol/Methanol 2/1, die 2,5 % eines Polymeren auf Basis Polyvinylacetat enthält, wird nach dem Spin-Coating-Verfahren auf eine Trägerplatte aus Polymethylmethacrylat aufgebracht, wobei sich eine Schicht von 0,8 µm bildet. Die Platte kann mit Hilfe eines Halbleiterlasers beschrieben und gelesen werden.

## Patentansprüche

**1.** Tetraindolylheptamethinether oder -alkohole der isomeren Formeln

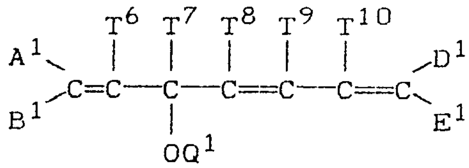

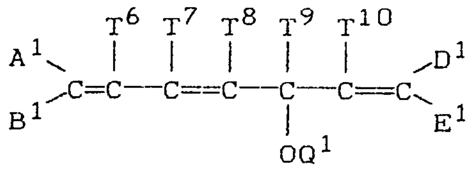

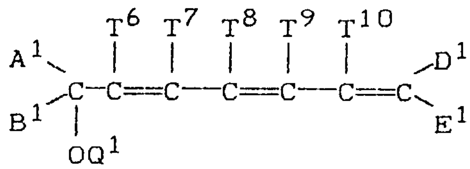

und

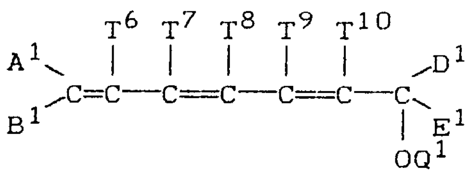

worin $A^1$, $B^1$, $D^1$ und $E^1$

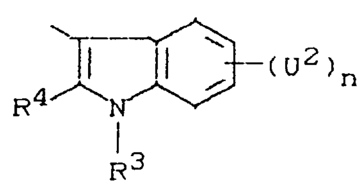

bedeuten und untereinander gleich oder verschieden sein können,

$Q^1$ Wasserstoff, $C_1$- bis $C_{18}$-Alkyl, das durch Chlor, $C_1$- bis $C_4$-Alkoxy, Cyano oder $C_1$- bis $C_4$-Alkoxycarbonyl substituiert sein kann, Allyl, Cyclopentyl, Cyclohexyl, gegebenenfalls durch $C_1$- bis $C_4$-Alkyl, Chlor und/oder $C_1$- bis $C_4$-Alkoxy substituierte Benzyl-, Phenethyl-, Naphthylmethyl-, Picolyl-, Phenyl- oder Naphthylreste,

$R^3$ Wasserstoff, $C_1$- bis $C_{18}$-Alkyl, das durch Chlor, $C_1$- bis $C_4$-Alkoxy, Cyano oder $C_1$- bis $C_4$-Alkoxycarbonyl substituiert sein kann, Allyl, Cyclopentyl, Cyclohexyl, gegebenenfalls durch $C_1$- bis $C_4$-Alkyl, Chlor und/oder $C_1$- bis $C_4$-Alkoxy substituierte Benzyl-, Phenethyl-, Naphthylmethyl- oder Picolylreste,

$R^4$ Wasserstoff, $C_1$- bis $C_{18}$-Alkyl, das durch Chlor, $C_1$- bis $C_4$-Alkoxy, Cyano oder $C_1$- bis $C_4$-Alkoxycarbonyl substituiert sein kann, Allyl, Cyclopentyl, Cyclohexyl, gegebenenfalls durch $C_1$- bis $C_4$-Alkyl, Chlor, Brom, $C_1$- bis $C_4$-Alkoxy, Cyano, Nitro und/oder $C_1$- bis $C_4$-Alkoxycarbonyl substituierte Benzyl-, Phenethyl-, Naphthylmethyl-, Picolyl-, Chinolylmethyl-, Phenyl-, Naphthyl-, Pyridyl-, Pyrimidyl-, Pyrazinyl-, Imidazolyl-, Oxazolyl-, Thiazolyl-, Triazolyl-, Benzimidazolyl-, Benzoxazolyl-, Benzthiazolyl- oder Chinolylreste,

$T^6$ bis $T^{10}$ Wasserstoff, $C_1$- bis $C_8$-Alkyl, das durch Chlor, $C_1$- bis $C_4$-Alkoxy, Cyano oder $C_1$- bis $C_4$-Alkoxycarbonyl substituiert sein kann, Vinyl, Allyl, Cyclopentyl, Cyclohexyl, Fluor, Chlor, Brom, $C_1$-bis $C_8$-Alkoxy, das noch durch $C_1$- bis $C_4$-Alkoxy substituiert sein kann, $C_1$- bis $C_4$-Dialkylamino, Piperidino, Pyrrolidino, Nitro, Cyano, $C_1$- bis $C_4$-Alkoxycarbonyl, gegebenenfalls durch $C_1$- bis $C_4$-Alkyl, Chlor, $C_1$- bis $C_4$-Alkoxy, $C_1$- bis $C_4$-Alkylsulfonyl, Cyano und/oder $C_1$- bis $C_4$-Alkoxycarbonyl substituierte Benzyl-, Phenethyl-, Naphthylmethyl-, Picolyl-, Phenyl-, Naphthyl-, Pyridyl-, Chinolyl-, Pyrimidyl-, Pyrazinyl-, Indolyl-, Indolenyl-, Indolizinyl-, Imidazolyl-, Oxazolyl-, Thiazolyl-, Triazolyl-, Benzimidazolyl-, Benzoxazolyl- oder Benzthiazolylreste oder jeweils zwei der Reste $T^6$ bis $T^{10}$ eine Brücke der Formeln $-CH_2CH_2-$, $-CH_2CH_2CH_2-$, $-CH_2CH_2CH_2CH_2-$, $-CH_2SCH_2-$,

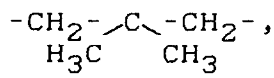

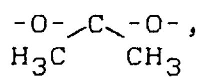

$CH=CH-CH_2-$, $-CH=CH-CH=CH-$,

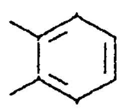 , 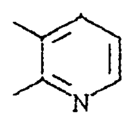 , 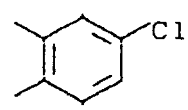

$U^2$ Wasserstoff, $C_1$- bis $C_8$-Alkyl, Allyl, Cyclohexyl, Benzyl, Phenyl, Hydroxy, $C_1$- bis $C_4$-Alkoxy, Chlor, Brom, $C_1$- bis $C_4$-Dialkylamino, Nitro, Cyano, $C_1$-bis $C_4$-Alkylthio, $C_1$- bis $C_4$-Alkoxycarbonyl, $C_1$-bis $C_4$-Dialkylaminocarbonyl, $C_1$- bis $C_4$-Alkoxycarbonyloxy oder $C_1$- bis $C_4$-Alkylsulfonyl oder zusammen mit $R^3$ eine $-CH_2CH_2-$ oder $-CH_2CH_2CH_2-$-Brücke, die durch maximal 3 Methylgruppen substituiert sein kann, und

n 1 oder 2 bedeuten.

**2.** Tetraindolylheptamethinether oder -alkohole der Formeln des Anspruchs 1, worin

$Q^1$ Wasserstoff, $C_1$- bis $C_8$-Alkyl, das durch Chlor, Methoxy, Ethoxy oder Cyano substituiert sein kann, Allyl, Cyclopentyl, Cyclohexyl, gegebenenfalls durch Methyl, Chlor oder Methoxy substituierte Benzyl-, Phenethyl- oder Picolylreste,

$R^3$ Wasserstoff, $C_1$- bis $C_8$-Alkyl, das durch Chlor, Methoxy, Ethoxy, Cyano oder Methoxycarbonyl substituiert sein kann, Allyl, Cyclopentyl, Cyclohexyl, gegebenenfalls durch Methyl, Chlor oder Methoxy substituierte Benzyl-, Phenethyl- oder Picolylreste,

$R^4$ Wasserstoff, $C_1$- bis $C_8$-Alkyl, das durch Chlor, Methoxy, Ethoxy, Cyano oder Methoxycarbonyl substituiert sein kann, Allyl, Cyclopentyl, Cyclohexyl, gegebenenfalls durch Methyl, Chlor, Methoxy, Cyano, Nitro und/oder Methoxycarbonyl substituierte Benzyl-, Phenethyl-, Picolyl-, Phenyl-, Naphthyl-, Pyridyl-, Pyrimidyl-, Benzimidazolyl-, Benzoxazolyl-, Benzthiazolyl- oder Chinolylreste,

$T^6$ und $T^{10}$ Wasserstoff, $C_1$- bis $C_8$-Alkyl, das durch Chlor, Methoxy, Cyano oder Methoxycarbonyl substituiert sein kann, Vinyl, Allyl, Cyclopentyl, Cyclohexyl, Chlor, $C_1$- bis $C_8$-Alkoxy, Cyano, Methoxycarbonyl, Nitro, Benzyl, gegebenenfalls durch Methyl, Chlor, Cyano oder Methoxy substituierte Phenyl- oder Pyridylreste,

$T^7$ bis $T^9$ Wasserstoff, $C_1$- bis $C_8$-Alkyl, das durch Chlor, Methoxy, Cyano oder Methoxycarbonyl substituiert sein kann, Allyl, Cyclopentyl, Cyclohexyl, Chlor, Brom, Cyano, Methoxy- und Ethoxycarbonyl, Nitro, $C_1$- bis $C_4$-Alkoxy, $C_1$- bis $C_4$-Dialkylamino, Benzyl,

gegebenenfalls durch Methyl, Ethyl, Chlor, Methoxy, Ethoxy, Cyano, Nitro und/oder Methoxycarbonyl substituierte Phenyl-, Naphthyl-, Pyridyl-, Chinolyl-, Pyrimidyl-, Indolenyl-, Indolizinyl-, Imidazolyl-, Oxazolyl-, Thiazolyl-, Benzimidazolyl-, Benzoxazolyl- oder Benzthiazolylreste oder

$T^7$ mit $T^8$ oder $T^9$ oder $T^8$ mit $T^9$ eine Brücke der Formeln

$-CH_2CH_2-$, $-CH_2CH_2CH_2-$,

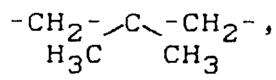

$-CH=CH-CH_2-$, $-CH=CH-CH=CH-$ oder

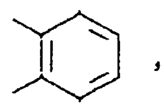

U² Wasserstoff, $C_1$- bis $C_4$-Alkyl, Cyclohexyl, Benzyl, $C_1$- bis $C_4$-Alkoxy, Chlor, $C_1$- bis $C_4$-Dialkylamino, Nitro, Cyano, Methoxy- oder Ethoxycarbonyl oder Methylsulfonyl, wobei $U^2$ in 5-, 6- und/oder 7-Position am Indolylrest stehen kann oder ein in 7-Position stehender Rest $U^2$ zusammen mit $R^3$ eine Brücke der Formeln

$-CH_2CH_2-$

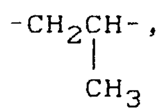
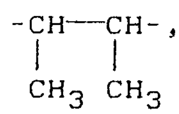
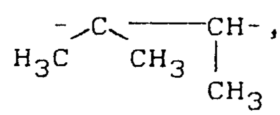

$-CH_2CH_2CH_2-$,

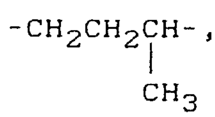
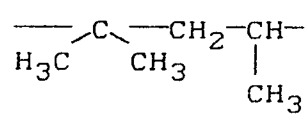

bilden kann, und

n 1 oder 2 bedeuten.

3. Verfahren zur Herstellung von Tetraindolylheptamethinethern oder -alkoholen des Anspruchs 1, dadurch gekennzeichnet, daß man Ethene der Formeln

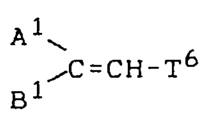
und/oder
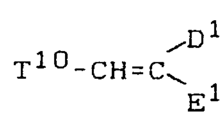

oder Carbinole der Formeln

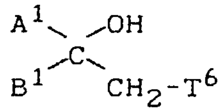

und/oder

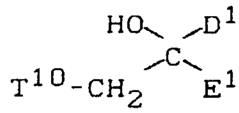

oder Salze der Formeln

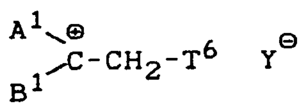

und/oder

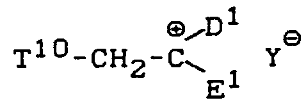

mit 1,3-Dicarbonylverbindungen der Formel

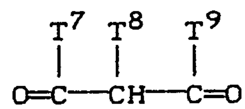

oder deren Acetale oder Ketale der Formel

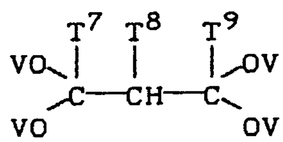

oder vinylogen Amidiniumsalze der Formel

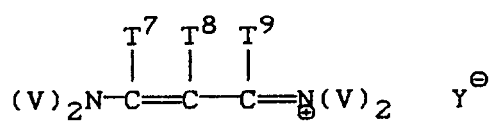

oder vinylogen Chlorimmoniumsalze von Formeln

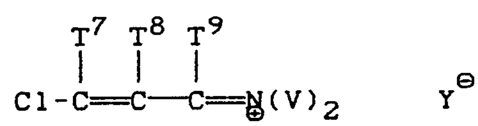

oder

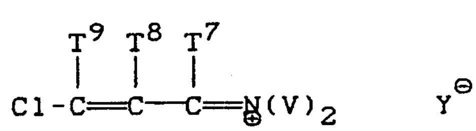

kondensiert und mit Verbindungen der Formel

$MOQ^1$

umsetzt, worin
$A^1$, $B^1$, $D^1$, $E^1$, $Q^1$ und $T^6$ bis $T^{10}$ die in Anspruch 1 angegebene Bedeutung besitzen, und

- V für $C_1$- bis $C_{18}$-Alkyl, Phenyl, Naphthyl oder Anthracenyl, die gegebenenfalls über eine $C_1$- bis $C_{18}$-Alkylgruppe gebunden sind,
- $Y^{\ominus}$ für ein Anion,
- M für ein Alkaliion, das Äquivalent eines Erdalkaliions oder für $NR_4$ stehen und
- R den gleichen Bedeutungsumfang annehmen kann wie V.

**4.** Verfahren zur Herstellung von Tetraindolylheptamethinethern und -alkoholen des Anspruchs 1, dadurch gekennzeichnet, daß man Aldehyde oder Ketone der Formeln

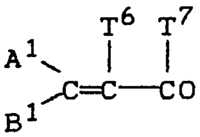
und/oder
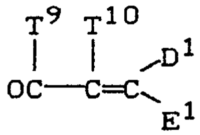

mit Butadienen der Formeln

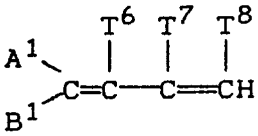
und/oder
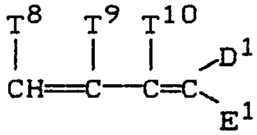

kondensiert und mit Verbindungen der Formel

$MOQ^1$

umsetzt, worin
$A^1$, $B^1$, $D^1$, $E^1$, $Q^1$ und $T^6$ bis $T^{10}$ die in Anspruch 1 angegebene Bedeutung besitzen, und

- M für ein Alkaliion, das Äquivalent eines Erdalkaliions oder für $NR_4$ steht und
- R den gleichen Bedeutungsumfang annehmen kann wie V.

**5.** Mischungen von Tetraindolylheptamethinethern und -alkoholen, dadurch gekennzeichnet, daß sie nach Verfahren der Ansprüche 3 oder 4 hergestellt werden.

**6.** Tetraindolylheptamethinfarbstoffe der Formel

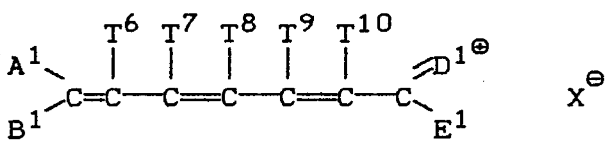

worin
$A^1$, $B^1$, $E^1$ und $T^6$ bis $T^{10}$ die in Anspruch 1 angegebene Bedeutung haben,
$D^{1\oplus}$ für

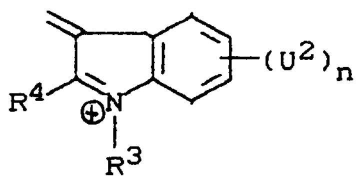

steht,
wobei $R^3$, $R^4$, $U^2$ und n die in Anspruch 1 angegebene Bedeutung haben und $X^{\ominus}$ für ein Anion steht.

**7.** Druck- oder thermoempfindliches Aufzeichnungsmaterial, dadurch gekennzeichnet, daß es Tetraindolylheptamethinether oder -alkohole des Anspruchs 1 enthält.

**8.** Optisches Aufzeichnungsmaterial, dadurch gekennzeichnet, daß es Tetraindolylheptamethinfarbstoffe des Anspruchs 6 enthält.

## Claims

**1.** Tetraindolyl heptamethine ethers or alcohols corresponding to the isomeric formulae:

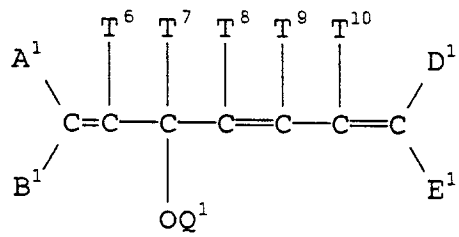

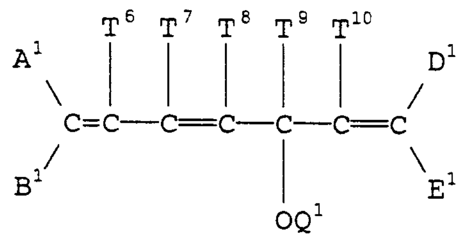

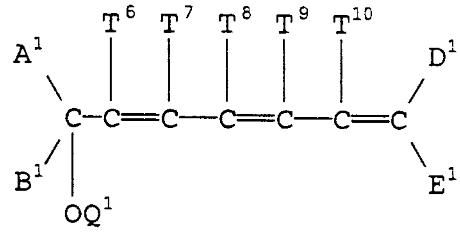

and

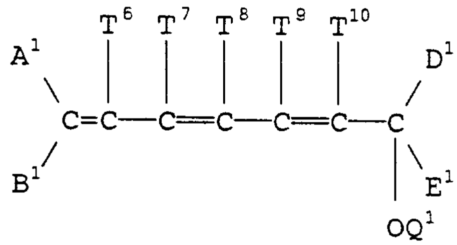

in which $A^1$, $B^1$, $D^1$ and $E^1$ may be the same or different and represent:

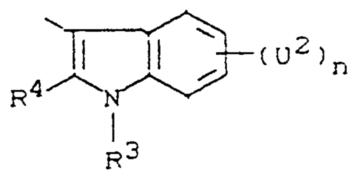

$Q^1$ represents hydrogen, $C_{1-18}$ alkyl, which may be substituted by chlorine, $C_{1-4}$ alkoxy, cyano or $C_{1-4}$ alkoxycarbonyl, allyl, cyclopentyl, cyclohexyl, optionally $C_{1-4}$-alkyl-, chlorine- and/or $C_{1-4}$-alkoxy-substituted benzyl, phenethyl, naphthylmethyl, picolyl, phenyl or naphthyl radicals,

$R^3$ represents hydrogen, $C_{1-18}$ alkyl, which may be substituted by chlorine, $C_{1-4}$ alkoxy, cyano or $C_{1-4}$ alkoxycarbonyl, allyl, cyclopentyl, cyclohexyl, optionally $C_{1-4}$-alkyl-, chlorine- and/or $C_{1-4}$-alkoxy-substituted benzyl, phenethyl, naphthylmethyl, picolyl, radicals,

$R^4$ represents hydrogen, $C_{1-18}$ alkyl, which may be substituted by chlorine, $C_{1-4}$ alkoxy, cyano or $C_{1-4}$ alkoxycarbonyl, allyl, cyclopentyl, cyclohexyl, optionally $C_{1-4}$-alkyl-, chlorine-, bromine-, $C_{1-4}$-alkoxy-, cyano-, nitro- and/or $C_{1-4}$-alkoxycarbonyl-substituted benzyl, phenethyl, naphthylmethyl, picolyl, quinolylmethyl, phenyl, naphthyl, pyridyl, pyrimidyl, pyrazinyl, imidazolyl, oxazolyl, thiazolyl, triazolyl, benzimidazolyl, benzoxazolyl, benzthiazolyl or quinolyl radicals,

$T^6$ to $T^{10}$ represent hydrogen, $C_{1-8}$ alkyl which may be substituted by chlorine, $C_{1-4}$ alkoxy, cyano or $C_{1-4}$ alkoxycarbonyl, vinyl, allyl, cyclopentyl, cyclohexyl, fluorine, chlorine, bromine, $C_{1-8}$ alkoxy, which may be substituted by $C_{1-4}$ alkoxy, $C_{1-4}$ dialkylamino, piperidino, pyrrolidino, nitro, cyano, $C_{1-4}$ alkoxycarbonyl, optionally $C_{1-4}$-alkyl-, chlorine-, $C_{1-4}$-alkoxy-,$C_{1-4}$-alkylsulfonyl-, cyano- and/or $C_{1-4}$-alkoxycarbonyl-substituted benzyl, phenethyl, naphthylmethyl, picolyl, phenyl, naphthyl, pyridyl, quinolyl, pyrimidyl, pyrazinyl, indolyl, indolenyl, indolizinyl, imidazolyl, oxazolyl, thiazolyl, triazolyl, benzimidazolyl, benzoxazolyl or benzthiazolyl radicals or two of the substituents $T^6$ to $T^{10}$ may form a bridge corresponding to the formulae $-CH_2CH_2-$, $-CH_2CH_2CH_2-$, $-CH_2CH_2CH_2CH_2-$,$-CH_2SCH_2-$,

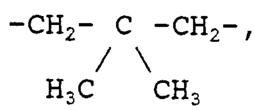 , 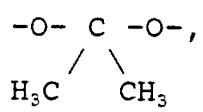 ,

$CH=CH-CH_2--CH=CH-CH=CH-$,

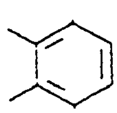 , 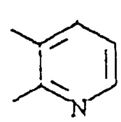 , 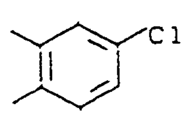

$U_2$ represents hydrogen, $C_{1-8}$ alkyl, allyl, cyclohexyl, benzyl, phenyl, hydroxy, $C_{1-4}$ alkoxy, chlorine, bromine, $C_{1-4}$ dialkylamino, nitro, cyano, $C_{1-4}$ alkylthio, $C_{1-4}$ alkoxycarbonyl, $C_{1-4}$ dialkylaminocarboxyl, $C_{1-4}$ alkoxycarbonyloxy or $C_{1-4}$ alkylsulfonyl or, together with $R^3$, forms a $-CH_2CH_2-$ or $CH_2CH_2CH_2-$ bridge which may be substituted by at most 3 methyl groups and

n = 1 or 2.

**2.** Tetraindolyl heptamethine ethers or alcohols corresponding to the formulae in claim 1, in which

$Q^1$ represents hydrogen, $C_{1-8}$ alkyl which may be substituted by chlorine, methoxy, ethoxy or cyano, allyl, cyclopentyl, cyclohexyl, optionally methyl-, chlorine- or methoxy-substituted benzyl, phenethyl or picolyl radicals,

$R^3$ represents hydrogen, $C_{1-8}$ alkyl which may be substituted by chlorine, methoxy, ethoxy, cyano or methoxycarbonyl, allyl, cyclopentyl, cyclohexyl, optionally methyl-, chlorine- or methoxy-substituted benzyl, phenethyl or picolyl radicals,

$R^4$ represents hydrogen, $C_{1-8}$ alkyl which may be substituted by chlorine, methoxy, ethoxy, cyano or methoxycarbonyl, allyl, cyclopentyl, cyclohexyl, optionally methyl-, chlorine-, methoxy-, cyano-, nitro- and/or methoxycarbonyl-substituted benzyl, phenethyl, picolyl, phenyl, naphthyl, pyridyl, pyrimidyl, benzimidazolyl, benzoxazolyl, benzthiazolyl or quinolyl radicals,

$T^6$ and $T^{10}$ represent hydrogen, $C_{1-8}$ alkyl which may be substituted by chlorine, methoxy, cyano or methoxycarbonyl, vinyl, allyl, cyclopentyl, cyclohexyl, chlorine, $C_{1-8}$ alkoxy, cyano, methoxycarbonyl, nitro, benzyl, optionally methyl-, chlorine-, cyano- or methoxy-substituted phenyl or pyridyl radicals,

$T^7$ to $T^9$ represent hydrogen, $C_{1-8}$ alkyl which may be substituted by chlorine, methoxy, cyano or methoxycarbonyl, allyl, cyclopentyl, cyclohexyl, chlorine, bromine, cyano, methoxy and ethoxycarbonyl, nitro, $C_{1-4}$ alkoxy, $C_{1-4}$ dialkylamino, benzyl, optionally methyl-, ethyl-, chlorine-, methoxy-, ethoxy-, cyano-, nitro- and/or methoxycarbonyl-substituted phenyl, naphthyl, pyridyl, quinolyl, pyrimidyl, indolenyl, indolizinyl, imidazolyl, oxazolyl, thiazolyl, benzimidazolyl, benzoxazole or benzthiazolyl radicals or

$T^7$ together with $T^8$ or $T^9$ or $T^8$ together with $T^9$ form a bridge corresponding to the following formulae $-CH_2CH_2-$, $CH_2CH_2CH_2-$,

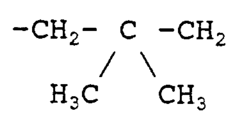

$-CH=CH-CH_2-$ $-CH=CH-CH=CH-$ or

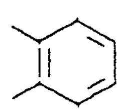

,

$U^2$ represents hydrogen, $C_{1-4}$ alkyl, cyclohexyl, benzyl, $C_{1-4}$ alkoxy, chlorine, $C_{1-4}$ dialkylamino, nitro, cyano, methoxy or ethoxycarbonyl or methylsulfonyl; $U^2$ may be in the 5, 6 and/or 7 position of the indolyl radical and a substituent $U^2$ in the 7 position together with $R^3$ may form a bridge corresponding to the following formulae:

$-CH_2CH_2-$

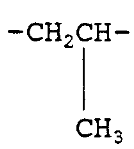 , 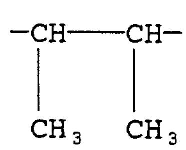 , 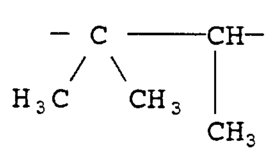

$-CH_2CH_2CH_2-$,

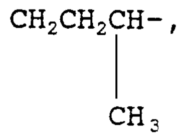 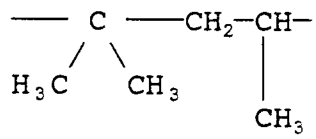

and

n = 1 or 2.

**3.** A process for the production of the tetraindolyl heptamethine ethers or alcohols claimed in claim 1, characterized in that ethenes corresponding to the following formulae:

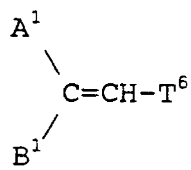 and/or 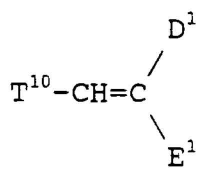

or carbinols corresponding to the following formulae

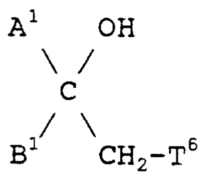 and/or 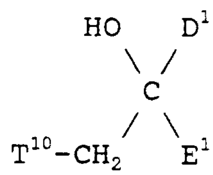

or salts corresponding to the following formulae

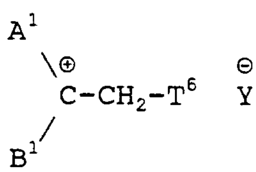 and/or 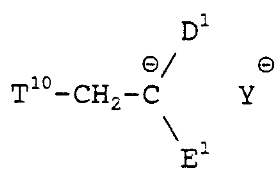

are condensed with 1,3-dicarbonyl compounds corresponding to the following formula:

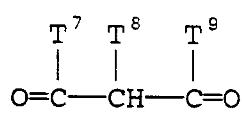

or acetals or ketals thereof corresponding to the following formula:

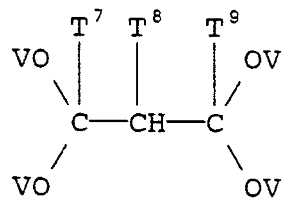

or vinylogous amidinium salts corresponding to the formula:

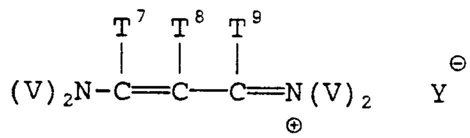

or vinylogous chorimmonium salts corresponding to the formulae:

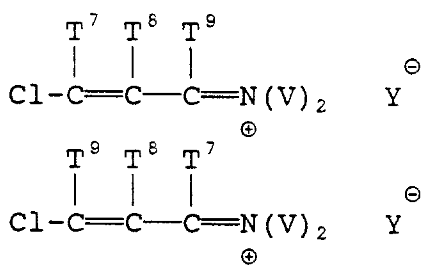

and the condensates obtained are reacted with compounds corresponding to the following formula:

$MOQ^1$

where
$A^1$, $B^1$, $D^1$, $E^1$, $Q^1$ and $T^6$ to $T^{10}$ are as defined in claim 1 and

- V represents $C_{1-18}$ alkyl, phenyl, naphthyl or anthracenyl optionally attached by a $C_{1-18}$ alkyl group,
- $Y^{\ominus}$ is an anion,
- M is an alkali metal ion, the equivalent of an alkaline earth metal ion or $NR_4$ and
- R may have the same meanings as V.

**4.** A process for the preparation of the tetraindolyl heptamethine ethers and alcohols claimed in claim 1, characterized in that aldehydes or ketones corresponding to the following formulae:

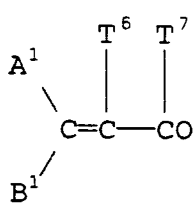

and/or

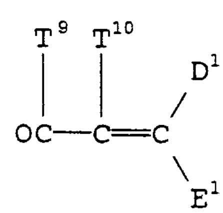

are condensed with butadienes corresponding to the following formulae:

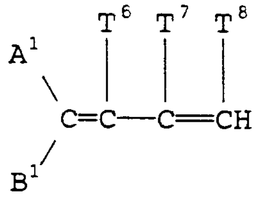

and/or

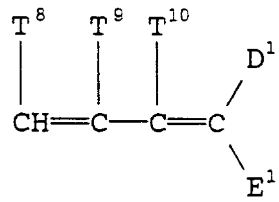

and the condensates obtained are reacted with compounds corresponding to the following formula:

$MOQ^1$

where

$A^1$, $B^1$, $D^1$, $E^1$, $Q^1$ and $T^6$ to $T^{10}$ are as defined in claim 1 and

M is an alkali metal ion, the equivalent of an alkaline earth metal ion or $NR_4$ and

R may have the same meaning as V.

**5.** Mixtures of tetraindolyl heptamethine ethers and alcohols, characterized in that they are produced by the process claimed in claim 3 or 4.

**6.** Tetraindolyl heptamethine dyes corresponding to the following formula:

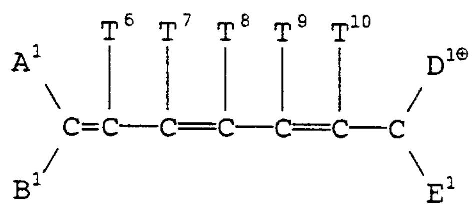

$X^{\ominus}$

in which

$A^1$, $B^1$, $E^1$ and $T^6$ to $T^{10}$ are as defined in claim 1,

$D^{1\oplus}$ represents

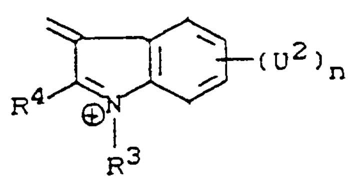

where $R^3$, $R^4$, $U^2$ and n are as defined in claim 1 and

$X^{\ominus}$ is an anion.

**7.** A pressure-sensitive or heat-sensitive recording material, characterized in that it contains the tetraindolyl heptamethine ethers or alcohols claimed in claim 1.

**8.** An optical recording material, characterized in that it contains the tetraindolyl heptamethine dyes claimed in claim 6.

## Revendications

**1.** Ethers ou alcools tétraindolyl-heptaméthiniques répondant aux formules isomères :

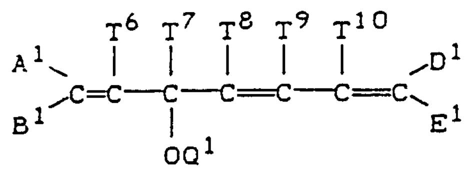

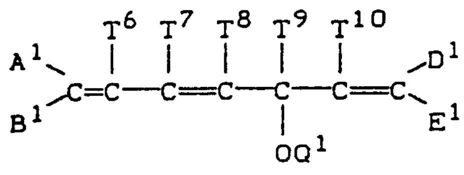

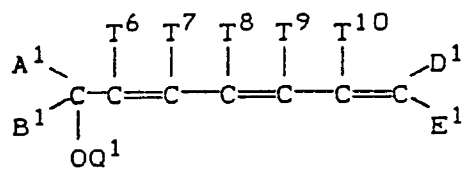

et

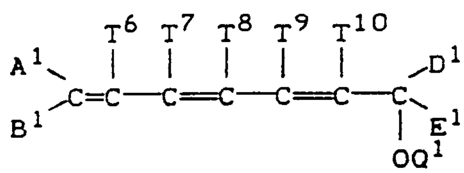

dans lesquelles $A^1$, $B^1$, $D^1$ et $E^1$ représentent chacun :

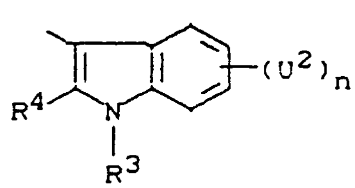

et peuvent être identiques ou différents ;
$Q^1$ représente un atome d'hydrogène, un reste alkyle en $C_1$ à $C_{18}$ (qui peut être substitué par du chlore, par un groupe alcoxy en $C_1$ à $C_4$, cyano ou alcoxycarbo nyle en $C_1$ à $C_4$), un reste allyle, cyclopentyle, cyclohexyle, un reste benzyle, phénéthyle, naphtylméthyle, picolyle, phényle ou naphtyle (éventuellement substitués par un groupe allyle en $C_1$ à $C_4$, par du chlore et/ou par un groupe alcoxy en $C_1$ à $C_4$),
$R^3$ représente un atome d'hydrogène, un reste alkyle en $C_1$ à $C_{18}$ (pouvant être substitué par du chlore, par un groupe alcoxy en $C_1$ à $C_4$, par un groupe cyano ou par un groupe alcoxycarbonyle en $C_1$ à $C_4$), un reste allyle, cyclopentyle, cyclohexyle, un reste benzyle, phénéthyle, naphtylméthyle ou picolyle (éventuellement substitues par un groupe alkyle en $C_1$ à $C_4$, par du chlore et/ou par un groupe alcoxy en $C_1$ à $C_4$),
$R^4$ représente un atome d'hydrogène, un reste alkyle en $C_1$ à $C_{18}$ (pouvant être substitué par du chlore, par un groupe alcoxy en $C_1$ à $C_4$, cyano ou par un groupe alcoxycarbonyle en $C_1$ à $C_4$), un

reste allyle, cyclopentyle, cyclohexyle, un reste benzyle, phénéthyle, naphtylméthyle, picolyle, quinolylméthyle, phényle, naphtyle, pyridyle, pyrimidyle, pyrazinyle, imidazolyle, oxazolyle, thiazolyle, triazolyle, benzimidazolyle, benzoxazolyle, benzothiazolyle ou quinolyle (éventuellement substitués par un groupe alkyle en $C_1$ à $C_4$, par du chlore, par du brome, par un groupe alcoxy en $C_1$ à $C_4$, cyano, nitro et/ou alcoxycarbonyle en $C_1$ à $C_4$),

$T^6$ à $T^{10}$ représentent chacun un atome d'hydrogène, un reste alkyle en $C_1$ à $C_8$ (qui peut être substitué par du chlore, par un groupe alcoxy en $C_1$ à $C_4$, cyano ou alcoxycarbonyle en $C_1$ à $C_4$), un reste vinyle, allyle, cyclohexyle, cyclopentyle, fluoro, chloro, bromo, alcoxy en $C_1$ à $C_8$ (qui peut encore être substitué par un groupe alcoxy en $C_1$ à $C_4$), dialkylamino dont chaque groupe amino est en $C_1$ à $C_4$, pipéridino, pyrrolidino, nitro, cyano, alcoxy(en $C_1$ à $C_4$)-carbonyle, un reste benzyle, phénéthyle, naphtylméthyle, picolyle, phényle, naphtyle, pyridyle, quinolyle, pyrimidyle, pyrazinyle, indolyle, indolényle, indolizinyle, imidazolyle, oxazolyle, thiazolyle, triazolyle, benzimidazolyle, benzoxalyle ou benzothiazolyle (éventuellement substitués par un groupe alkyle en $C_1$ à $C_4$, chloro, alcoxy en $C_1$ à $C_4$, alkylsulfonyle en $C_1$ à $C_4$, cyano et/ou alcoxy(en $C_1$ à $C_4$)-carbonyle), ou bien, à chaque fois, deux des restes $T^6$ à $T^{10}$ peuvent former un pont répondant aux formules :

$-CH_2CH_2-$, $-CH_2CH_2CH_2-$,$-CH_2CH_2CH_2CH_2-$, $-CH_2SCH_2-$,

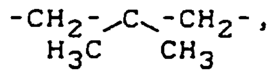

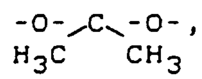

$CH=CH-CH_2-$, $-CH=CH-CH=CH-$,

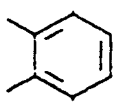 , 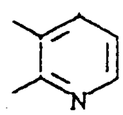 , 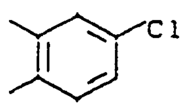

$U^2$ représente un atome d'hydrogène un reste alkyle en $C_1$ à $C_8$, allyle, cyclohexyle, benzyle, phényle, hydroxy, alcoxy en $C_1$ à $C_4$, chloro, bromo, dialkylamino (dont chaque groupe alkyle est en $C_1$ à $C_4$), nitro, cyano, alkylthio en $C_1$ à $C_4$, alcoxycarbonyle en $C_1$ à $C_4$, dialkylaminocarbonyle (dont chaque groupe alkyle est en $C_1$ à $C_4$), alcoxy(en $C_1$ à $C_4$)-carbonyloxy ou alkylsulfonyle en $C_1$ à $C_4$, ou bien il forme avec $R^3$ un pont $-CH_2CH_2-$ ou $-CH_2CH_2CH_2-$, qui peut être substitué par au maximum trois groupes méthyles,

et

n vaut 1 ou 2.

**2.** Ethers ou alcools tétraindolyl-heptaméthiniques répondant aux formules de la revendication 1, dans lesquelles :

$Q^1$ représente un atome d'hydrogène, un reste alkyle en $C_1$ à $C_8$ (qui peut être substitué par un groupe chloro, méthoxy, éthoxy ou cyano), allyle, cyclopentyle, cyclohexyle, un reste benzyle, phénéthyle ou picolyle (éventuellement substitués par un groupe méthyle, chloro ou méthoxy),

$R^3$ représente un atome d'hydrogène, un reste alkyle en $C_1$ à $C_8$ (qui peut être substitué par un groupe chloro, méthoxy, éthoxy, cyano ou méthoxycarbonyle), allyle, cyclopentyle, cyclohexyle, un reste benzyle, phénéthyle ou picolyle (éventuellement substitués par un groupe méthyle, chloro ou méthoxy),

$R^4$ représente un atome d'hydrogène, un reste alkyle en $C_1$ à $C_8$ (qui peut être substitué par un groupe chloro, méthoxy, éthoxy, cyano ou méthoxycarbonyle), allyle, cyclopentyle, cyclohexyle, un reste benzyle, phénéthyle, picolyle, phényle, napthyle, pyridyle, pyrimidyle, benzimidazolyle, benzoxazolyle, benzothiazolyle ou quinolyle (éventuellement substitués par un groupe méthyle, chloro, méthoxy, cyano, nitro et/ou méthoxycarbonyle),

$T^6$ et $T^{10}$ représentent chacun un atome d'hydrogène, un reste alkyle en $C_1$ à $C_8$ (qui peut être substitué par un groupe chloro, méthoxy, cyano ou méthoxycarbonyle), vinyle, allyle, cyclopentyle,

cyclohexyle, chloro, alcoxy en $C_1$ à $C_8$, cyano, méthoxycarbonyle, nitro, benzyle, un reste phényle ou pyridyle (éventuellement substitués par un groupe méthyle, chloro, cyano ou méthoxy),

$T^7$ à $T^9$ représentent chacun un atome d'hydrogène, un reste alkyle en $C_1$ à $C_8$ (qui peut être substitué par un groupe chloro, méthoxy, cyano ou méthoxycarbonyle), allyle, cyclopentyle, cyclohexyle, chloro, bromo, cyano, méthoxycarbonyle et éthoxycarbonyle, nitro, alcoxy en $C_1$ à $C_4$, dialkylamino dont chaque groupe alkyle est en $C_1$ à $C_4$, benzyle, un reste phényle, naphtyle, pyridyle, quinolyle, pyrimidyle, indolényle, indolizinyle, imidazolyle, oxazolyle, thiazolyle, benzimidazolyle, benzoxazolyle et benzothiazolyle (éventuellement substitués par un groupe méthyle, éthyle, chloro, méthoxy, éthoxy, cyano, nitro et/ou méthoxycarbonyle),

ou bien

$T^7$ forme avec $T^8$ ou $T^9$ ou bien $T^8$ forme avec $T^9$ un pont répondit aux formules :

$-CH_2CH_2-$, $-CH_2CH_2CH_2-$,

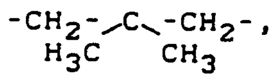

$-CH=CH-CH_2-$, $-CH=CH-CH=CH-$ ou

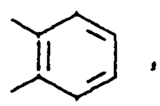

$U^2$ représente un atome d'hydrogène, un reste alkyle en $C_1$ à $C_4$, cyclohexyle, benzyle, alcoxy en $C_1$ à $C_4$, chloro, dialkylamino (dont chaque groupe alkyle est en $C_1$ à $C_4$), nitro, cyano, méthoxycarbonyle ou éthoxycarbonyle ou méthylsulfonyle, le substituant $U^2$ pouvant être fixé en position 5, 6 et/ou 7 du reste indolyle, ou bien un reste $U^2$, fixé en position 7, peut former avec $R^3$ un pont répondit aux formules :

$-CH_2CH_2-$

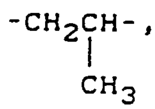 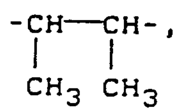 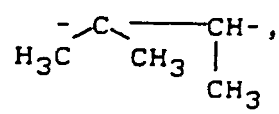

$-CH_2CH_2CH_2-$,

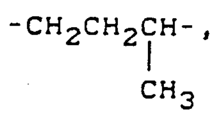 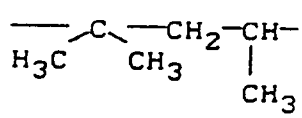

et

n vaut 1 ou 2.

3. Procédé de préparation d'éthers ou d'alcools tétraindolylheptaméthiniques selon la revendication 1, procédé caractérisé en ce qu'on condense des éthènes répondant aux formules :

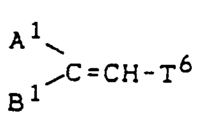 et/ou 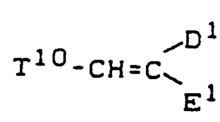

ou des carbinols répondant aux formules :

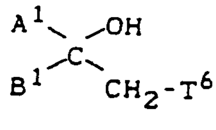

et/ou

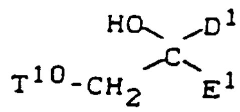

ou de sels de formules :

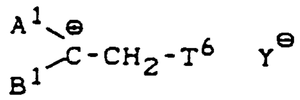

et/ou

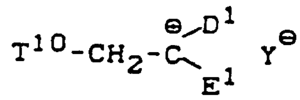

avec des composés 1,3-dicarbonylés, de formule :

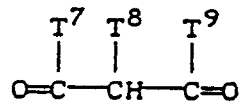

ou avec leurs acétals ou cétals de formule :

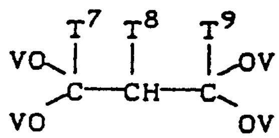

ou avec des sels d'amidinium, générateurs de groupes vinyles et répondit à la formule :

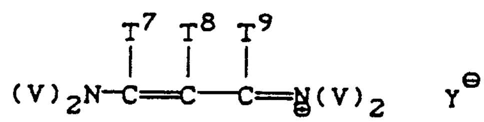

ou avec des sels de chlorimmonium, générateurs d'un groupe vinyle, répondant aux formules :

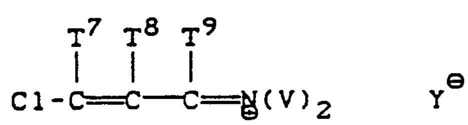

ou

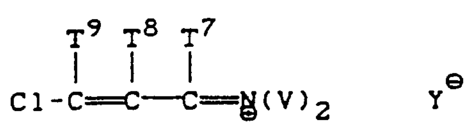

et l'on fait réagir avec des composés de formule :

MOQ[1] XXII

formules dans lesquelles
$A^1$, $B^1$, $D^1$, $E^1$, $Q^1$ et $T^6$ à $T^{10}$ ont le sens indiqué à la revendication 1, et
V représente un reste alkyle en $C_1$ à $C_{18}$, phényle, naphtyle ou anthracényle, qui sont éventuellement reliés par l'intermédiaire d'un groupe alkyle en $C_1$ à $C_{18}$,
$Y^-$ représente un anion,
M représente un ion alcalin, l'équivalent d'un ion alcalino-terreux ou $NR_4$, et
R peut avoir un sens se situant dans le même cadre que celui de V.

**4.** Procédé pour préparer des éthers et alcools tétraindolyl-heptaméthiniques selon la revendication 1, procédé caractérisé en ce qu'on condense des aldéhydes ou des cétones répondit aux formules :

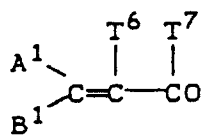

et/ou

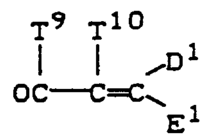

avec des butadiènes de formule :

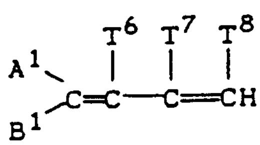

et/ou

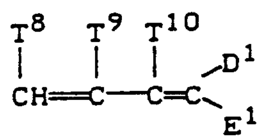

et l'on fait réagir avec des composés de formule :

MOQ[1]

formules dans lesquelles :
$A^1$, $B^1$, $D^1$, $E^1$, $Q^1$ et $T^6$ à $T^{10}$ ont le sens indiqué à la revendication 1, et
M représente un ion alcalin, l'équivalent d'un ion alcalino-terreux ou $NR_4$, et
R a un sens pris dans le même cadre que celui de V.

**5.** Mélanges d'éthers et d'alcools tétraindolyl-heptaméthiniques, caractérisés en ce qu'on les prépare par un procédé selon la revendication 3 ou 4.

**6.** Colorants tétraindolyl-heptaméthiniques de formule :

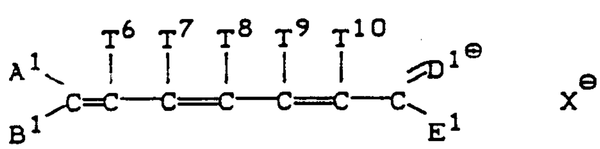

dans laquelle :
$A^1$, $B^1$, $E^1$ et $T^6$ à $T^{10}$ ont le sens indiqué à la revendication 1, et
$D^{1+}$ représente

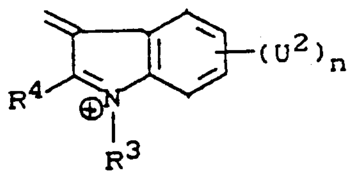

formule dans laquelle
$R^3$, $R^4$, $U^2$ et n ont le sens indiqué à la revendication 1, et
X représente un anion.

7. Matériau d'enregistrement sensible à la pression ou thermosensible, caractérisé en ce qu'il contient de l'éther ou des alcools tétraindolylhpetaméthiniques selon la revendication 1.

8. Matériau d'enregistrement optique, caractérisé en ce qu'il contient des colorants tétraindolyl-heptaméthiniques selon la revendication 6.